(19) Europäisches Patentamt
European Patent Office
Office européen des brevets

(11) **EP 4 637 046 A1**

(12) **EUROPEAN PATENT APPLICATION**
published in accordance with Art. 153(4) EPC

(43) Date of publication:
22.10.2025 Bulletin 2025/43

(21) Application number: 23902399.7

(22) Date of filing: 16.11.2023

(51) International Patent Classification (IPC):
H04B 7/08 (2006.01)   H04W 72/04 (2023.01)

(52) Cooperative Patent Classification (CPC):
H04B 7/026; H04B 7/0408; H04B 7/08; H04L 5/00;
H04W 72/04

(86) International application number:
PCT/CN2023/132029

(87) International publication number:
WO 2024/125199 (20.06.2024 Gazette 2024/25)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.12.2022 CN 202211617539

(71) Applicant: Datang Mobile Communications
Equipment Co., Ltd.
Beijing 100085 (CN)

(72) Inventors:
• SONG, Lei
  Beijing 100085 (CN)
• SU, Xin
  Beijing 100085 (CN)
• ZHANG, Xin
  Beijing 100085 (CN)

(74) Representative: Ipsilon
Le Centralis
63, avenue du Général Leclerc
92340 Bourg-la-Reine (FR)

(54) **BEAM INDICATION METHOD, DEVICE, APPARATUS, AND STORAGE MEDIUM**

(57) Embodiments of the present disclosure provide a beam indication method, a device, an apparatus, and a storage medium. The method comprises: a terminal receiving downlink control information (DCI) signaling sent by a network device, the DCI signaling comprising one or more first information domains, and the one or more first information domains being used for indicating one or more types of beam information; and on the basis of the one or more first information domains, determining beam information indicated through the network device, wherein the type of the beam information comprises one or more of a beam index, a transmission configuration indication (TCI) state, a spatial relationship, a wide beam index, and a narrow beam index.

Receiving a downlink control information (DCI) signaling transmitted from a network device, where the DCI signaling includes one or more first information fields, and the first information field is used to indicate one or more types of beam information — 100

Determining the beam information indicated by the network device based on the one or more first information fields — 101

FIG. 1

**Description**

CROSS-REFERENCES TO RELATED APPLICATIONS

The present application claims priority to Chinese patent application No. 202211617539.2 filed on December 15, 2022, entitled "Beam Indication Method, Device, Apparatus, and Storage Medium", which is hereby incorporated by reference in its entirety.

FIELD

The present application relates to the field of radio communication, and in particular, to methods and apparatuses for beam indication, devices, and a storage medium.

BACKGROUND

In a new radio (NR) system, especially in a high frequency band, beamforming is used to transmit physical channels or physical signals. During a transmission, a network side notifies a terminal, through a beam indication, of a beam used by a certain physical channel or signal, and accordingly, the terminal may determine, based on an indication from the network side, a corresponding transmitting or receiving filter to transmit or receive a corresponding physical channel or signal.

In the related art, a beam indication method of a relay (such as a network control repeater (NCR) system) is different from a beam indication method of a base station. A beam indication of the relay adopts a form of beam index, while a beam indication of the base station adopts a form of transmission configuration indication (TCI) state. However, in a distributed reconfigurable intelligent surface (RIS) cooperative transmission, there may be multiple forms of cooperation to serve a terminal, such as RIS-RIS cooperation, base station-base station cooperation, base station-RIS cooperation, etc. Since ways for beam indication for the base station and the relay are different, in case that a traditional beam indication method is directly applied, in a distributed RIS cooperative transmission scenario, the terminal may not be able to correctly determine a serving beam for each physical channel or physical signal.

BRIEF SUMMARY

In response to the problems in the related art, embodiments of the present application provide methods and apparatuses for beam indication, devices, and a storage medium.

An embodiment of the present application provides a method for beam indication, performed by a terminal, including:

receiving a downlink control information (DCI) signaling transmitted from a network device, where the DCI signaling includes one or more first information fields, and the first information field is used to indicate one or more types of beam information; and

determining the beam information indicated by the network device based on the one or more first information fields;

where the type of the beam information includes one or more of: beam index, transmission configuration indication (TCI) state, spatial relation information, wide beam index, or narrow beam index.

In some embodiments, before receiving the DCI signaling transmitted from the network device, the method further includes:

receiving first configuration information transmitted from the network device, where the first configuration information is used to configure one or more of:

a quantity of the first information fields;

a quantity of pieces of beam information indicated by the first information field;

a type of beam information indicated by the first information field; or

a quantity of pieces of beam information of different types indicated by the first information field.

In some embodiments, in case that the first configuration information is used to configure the quantity of pieces of beam information indicated by the first information field, or used to configure the quantity of pieces of beam information of different types indicated by the first information field, determining the beam information indicated by the network device based on the one or more first information fields includes:

determining the beam information indicated by the network device based on the one or more first information fields and one or more second information fields included in the DCI signaling, where the second information field is used to indicate valid beam information in the beam information indicated by the first information field.

In some embodiments, the second information field is used to indicate one or more of in the beam information indicated by the first information field:
a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.

In some embodiments, the method further includes:
receiving a medium access control-control element (MAC-CE) signaling transmitted from the network device, where the MAC-CE signaling is used to activate one or more beam information groups, and an activated beam information group includes one or more types of beam information.

In some embodiments, the beam information group is associated with first information indicated by the first information field; and
determining the beam information indicated by the network device based on the one or more first information fields includes:
determining the beam information indicated by the network device based on the first information indicated by the one or more first information fields, and an association relationship between the beam information group and the first information indicated by the first information field.

In some embodiments, beam information of different types are jointly numbered.

In some embodiments, the method further includes:
determining a type of beam information activated by the MAC-CE signaling based on a sequence number of the beam information.

In some embodiments, the MAC-CE signaling includes first indication information, and the first indication information is used to indicate a type of beam information.

In some embodiments, the DCI signaling includes second indication information, and the second indication information is used to indicate a type of beam information or a combination of types of beam information corresponding to the first information field.

In some embodiments, the second indication information is a most significant bit of the first information field, or other information fields in the DCI signaling except the first information field.

In some embodiments, the method further includes:

determining, based on an association relationship between the beam information and a physical channel or physical signal, the physical channel or physical signal corresponding to the beam information indicated by the network device,

where the association relationship between the beam information and the physical channel or physical signal is predefined by a specification or determined based on second configuration information transmitted from the network device.

In some embodiments, the association relationship between the beam information and the physical channel or physical signal includes an association relationship between an information field, the beam information, or the type of the beam information and one or more of:

an uplink or downlink channel;

a channel corresponding to a time index;

a specific physical channel or physical signal;

a transmission occasion for a specific physical channel or physical signal; or

a number of transmission layers of a specific physical channel or physical signal.

In some embodiments, the association relationship between the beam information and the physical channel or physical signal includes one or more of:

a first TCI state and/or a first beam index indicated in the DCI signaling corresponds to a first channel, and a second TCI state and/or a second beam index indicated in the DCI signaling corresponds to a second channel;

a TCI state indication field in the DCI signaling corresponds to a first channel, and a beam index indication field in the DCI signaling corresponds to a second channel;

a first valid TCI state and/or a first valid beam index indicated in the DCI signaling corresponds to a first channel, and a second valid TCI state and/or a second valid beam index indicated in the DCI signaling corresponds to a second channel; or

a first piece of valid beam information indicated in the DCI signaling corresponds to a first channel, and a second piece of valid beam information indicated in the DCI signaling corresponds to a second channel.

An embodiment of the present application further provides a method for beam indication, performed by a network device, including:

determining a downlink control information (DCI) signaling, where the DCI signaling includes one or more first information fields, and the first information field is used to indicate one or more types of beam information; and

transmitting the DCI signaling to a terminal;

where the type of the beam information includes one or more of: beam index, transmission configuration indication (TCI) state, spatial relation information, wide beam index, or narrow beam index.

In some embodiments, the method further includes:
transmitting first configuration information to the terminal, where the first configuration information is used to configure one or more of:

a quantity of the first information fields;

a quantity of pieces of beam information indicated by the first information field;

a type of beam information indicated by the first information field; or

a quantity of pieces of beam information of different types indicated by the first information field.

In some embodiments, in case that the first configuration information is used to configure the quantity of pieces of beam information indicated by the first information field, or used to configure the quantity of pieces of beam information of different types indicated by the first information field, the DCI signaling further includes one or more second information fields, and the second information field is used to indicate valid beam information in the beam information indicated by the first information field.
In some embodiments, the second information field is used to indicate one or more of in the beam information indicated by the first information field:
a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.
In some embodiments, the method further includes:
transmitting a medium access control-control element (MAC-CE) signaling to the terminal, where the MAC-CE signaling is used to activate one or more beam information groups, and an activated beam information group includes one or more types of beam information.
In some embodiments, the beam information group is associated with first information indicated by the first information field.

In some embodiments, beam information of different types are jointly numbered.

In some embodiments, the MAC-CE signaling includes first indication information, and the first indication information is used to indicate a type of beam information.

In some embodiments, the DCI signaling includes second indication information, and the second indication information is used to indicate a type of beam information or a combination of types of beam information corresponding to the first information field.

In some embodiments, the second indication information is a most significant bit of the first information field, or other information fields in the DCI signaling except the first information field.

In some embodiments, the method further includes:

transmitting second configuration information to the terminal, where the second configuration information is used to configure an association relationship between the beam information and a physical channel or physical signal.

In some embodiments, the association relationship between the beam information and the physical channel or physical signal includes an association relationship between an information field, the beam information, or the type of the beam information and one or more of:

an uplink or downlink channel;

a channel corresponding to a time index;

a specific physical channel or physical signal;

a transmission occasion for a specific physical channel or physical signal; or

a number of transmission layers of a specific physical channel or physical signal.

In some embodiments, the association relationship between the beam information and the physical channel or physical signal includes one or more of the following:

a first TCI state and/or a first beam index indicated in the DCI signaling corresponds to a first channel, and a second TCI state and/or a second beam index indicated in the DCI signaling corresponds to a second channel;

a TCI state indication field in the DCI signaling corresponds to a first channel, and a beam index indication field in the DCI signaling corresponds to a second channel;

a first valid TCI state and/or a first valid beam index indicated in the DCI signaling corresponds to a first channel, and a second valid TCI state and/or a second valid beam index indicated in the DCI signaling corresponds to a second channel; or

a first piece of valid beam information indicated in the DCI signaling corresponds to a first channel, and a second piece of valid beam information indicated in the DCI signaling corresponds to a second channel.

An embodiment of the present application further provides a terminal, including a memory, a transceiver and a processor,

where the memory is used for storing a computer program, the transceiver is used for receiving and transmitting data under control of the processor, and the processor is used for reading the computer program in the memory and performing following operations:

receiving a downlink control information (DCI) signaling transmitted from a network device, where the DCI signaling includes one or more first information fields, and the first information field is used to indicate one or more types of beam information; and

determining the beam information indicated by the network device based on the one or more first information fields;

where the type of the beam information includes one or more of: beam index, transmission configuration indication (TCI) state, spatial relation information, wide beam index, or narrow beam index.

In some embodiments, before receiving the DCI signaling transmitted from the network device, the operations further include:

EP 4 637 046 A1

receiving first configuration information transmitted from the network device, where the first configuration information is used to configure one or more of:

a quantity of the first information fields;

a quantity of pieces of beam information indicated by the first information field;

a type of beam information indicated by the first information field; or

a quantity of pieces of beam information of different types indicated by the first information field.

In some embodiments, in case that the first configuration information is used to configure the quantity of pieces of beam information indicated by the first information field, or used to configure the quantity of pieces of beam information of different types indicated by the first information field, determining the beam information indicated by the network device based on the one or more first information fields includes:

determining the beam information indicated by the network device based on the one or more first information fields and one or more second information fields included in the DCI signaling,

where the second information field is used to indicate valid beam information in the beam information indicated by the first information field.

In some embodiments, the second information field is used to indicate one or more of in the beam information indicated by the first information field:

a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.

In some embodiments, the operations further include:

receiving a medium access control-control element (MAC-CE) signaling transmitted from the network device, where the MAC-CE signaling is used to activate one or more beam information groups, and an activated beam information group includes one or more types of beam information.

In some embodiments, the beam information group is associated with first information indicated by the first information field; and

determining the beam information indicated by the network device based on the one or more first information fields includes:

determining the beam information indicated by the network device based on the first information indicated by the one or more first information fields, and an association relationship between the beam information group and the first information indicated by the first information field.

In some embodiments, beam information of different types are jointly numbered.

In some embodiments, the operations further include:

determining a type of beam information activated by the MAC-CE signaling based on a sequence number of the beam information.

In some embodiments, the MAC-CE signaling includes first indication information, and the first indication information is used to indicate a type of beam information.

In some embodiments, the DCI signaling includes second indication information, and the second indication information is used to indicate a type of beam information or a combination of types of beam information corresponding to the first information field.

In some embodiments, the second indication information is a most significant bit of the first information field, or other information fields in the DCI signaling except the first information field.

In some embodiments, the operations further include:

determining, based on an association relationship between the beam information and a physical channel or physical signal, the physical channel or physical signal corresponding to the beam information indicated by the network device,

where the association relationship between the beam information and the physical channel or physical signal is predefined by a specification or determined based on second configuration information transmitted from the network device.

6

In some embodiments, the association relationship between the beam information and the physical channel or physical signal includes an association relationship between an information field, the beam information, or the type of the beam information and one or more of:

an uplink or downlink channel;

a channel corresponding to a time index;

a specific physical channel or physical signal;

a transmission occasion for a specific physical channel or physical signal; or

a number of transmission layers of a specific physical channel or physical signal.

In some embodiments, the association relationship between the beam information and the physical channel or physical signal includes one or more of the following:

a first TCI state and/or a first beam index indicated in the DCI signaling corresponds to a first channel, and a second TCI state and/or a second beam index indicated in the DCI signaling corresponds to a second channel;

a TCI state indication field in the DCI signaling corresponds to a first channel, and a beam index indication field in the DCI signaling corresponds to a second channel;

a first valid TCI state and/or a first valid beam index indicated in the DCI signaling corresponds to a first channel, and a second valid TCI state and/or a second valid beam index indicated in the DCI signaling corresponds to a second channel; or

a first piece of valid beam information indicated in the DCI signaling corresponds to a first channel, and a second piece of valid beam information indicated in the DCI signaling corresponds to a second channel.

An embodiment of the present application further provides a network device, including a memory, a transceiver and a processor,
where the memory is used for storing a computer program, the transceiver is used for receiving and transmitting data under control of the processor, and the processor is used for reading the computer program in the memory and performing following operations:

determining a downlink control information (DCI) signaling, where the DCI signaling includes one or more first information fields, and the first information field is used to indicate one or more types of beam information; and

transmitting the DCI signaling to a terminal;

where the type of the beam information includes one or more of: beam index, transmission configuration indication (TCI) state, spatial relation information, wide beam index, or narrow beam index.

In some embodiments, the operations further include:
transmitting first configuration information to the terminal, where the first configuration information is used to configure one or more of:

a quantity of the first information fields;

a quantity of pieces of beam information indicated by the first information field;

a type of beam information indicated by the first information field; or

a quantity of pieces of beam information of different types indicated by the first information field.

In some embodiments, in case that the first configuration information is used to configure the quantity of pieces of beam information indicated by the first information field, or used to configure the quantity of pieces of beam information of different types indicated by the first information field, the DCI signaling further includes one or more second information fields, and the second information field is used to indicate valid beam information in the beam information indicated by the first information field.

In some embodiments, the second information field is used to indicate one or more of in the beam information indicated by the first information field:

a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.

In some embodiments, the operations further include:

transmitting a medium access control-control element (MAC-CE) signaling to the terminal, where the MAC-CE signaling is used to activate one or more beam information groups, and an activated beam information group includes one or more types of beam information.

In some embodiments, the beam information group is associated with first information indicated by the first information field.

In some embodiments, beam information of different types are jointly numbered.

In some embodiments, the MAC-CE signaling includes first indication information, and the first indication information is used to indicate a type of beam information.

In some embodiments, the DCI signaling includes second indication information, and the second indication information is used to indicate a type of beam information or a combination of types of beam information corresponding to the first information field.

In some embodiments, the second indication information is a most significant bit of the first information field, or other information fields in the DCI signaling except the first information field.

In some embodiments, the operations further include:

transmitting second configuration information to the terminal, where the second configuration information is used to configure an association relationship between the beam information and a physical channel or physical signal.

In some embodiments, the association relationship between the beam information and the physical channel or physical signal includes an association relationship between an information field, the beam information, or the type of the beam information and one or more of:

an uplink or downlink channel;

a channel corresponding to a time index;

a specific physical channel or physical signal;

a transmission occasion for a specific physical channel or physical signal; or

a number of transmission layers of a specific physical channel or physical signal.

In some embodiments, the association relationship between the beam information and the physical channel or physical signal includes one or more of the following:

a first TCI state and/or a first beam index indicated in the DCI signaling corresponds to a first channel, and a second TCI state and/or a second beam index indicated in the DCI signaling corresponds to a second channel;

a TCI state indication field in the DCI signaling corresponds to a first channel, and a beam index indication field in the DCI signaling corresponds to a second channel;

a first valid TCI state and/or a first valid beam index indicated in the DCI signaling corresponds to a first channel, and a second valid TCI state and/or a second valid beam index indicated in the DCI signaling corresponds to a second channel; or

a first piece of beam information indicated in the DCI signaling corresponds to a first channel, and a second piece of valid beam information indicated in the DCI signaling corresponds to a second channel.

An embodiment of the present application further provides an apparatus for beam indication, including:

a first receiving unit, used for receiving a downlink control information (DCI) signaling transmitted from a network device, where the DCI signaling includes one or more first information fields, and the first information field is used to indicate one or more types of beam information; and

a first determining unit, used for determining the beam information indicated by the network device based on the one or more first information fields;

where the type of the beam information includes one or more of: beam index, transmission configuration indication (TCI) state, spatial relation information, wide beam index, or narrow beam index.

An embodiment of the present application further provides an apparatus for beam indication, including:

a fourth determining unit, used for determining a downlink control information (DCI) signaling, where the DCI signaling includes one or more first information fields, and the first information field is used to indicate one or more types of beam information; and

a first transmitting unit, used for transmitting the DCI signaling to a terminal;

where the type of the beam information includes one or more of: beam index, transmission configuration indication (TCI) state, spatial relation information, wide beam index, or narrow beam index.

An embodiment of the present application further provides a computer-readable storage medium storing a computer program, where the computer program is used for causing a computer to perform any of the methods for beam indication provided above.

An embodiment of the present application further provides a communication device storing a computer program, where the computer program is used for causing the communication device to perform any of the methods for beam indication provided above.

An embodiment of the present application further provides a processor-readable storage medium storing a computer program, where the computer program is used for causing a processor to perform any of the methods for beam indication provided above.

An embodiment of the present application further provides a chip product storing a computer program, where the computer program is used for causing the chip product to perform any of the methods for beam indication provided above.

In the methods and apparatuses for beam indication, the devices, and the storage medium provided by the embodiments of the present application, the DCI signaling including one or more first information fields is transmitted to the terminal from the network device, any first information field may indicate one or more types of beam information, and the terminal may determine the serving beam under different cooperative forms based on the beam information indicated by the network device in a reconfigurable intelligent surface (RIS) cooperative transmission scenario.

BRIEF DESCRIPTION OF THE DRAWINGS

In order to illustrate the solutions disclosed in the embodiments of the present application more clearly, the drawings used in the description of the embodiments are briefly described below. The drawings in the following description are some embodiments of the present application, and other drawings may be obtained according to these drawings without any creative work for those skilled in the art.

FIG. 1 is a first schematic flowchart of a method for beam indication according to an embodiment of the present application;

FIG. 2 is a second schematic flowchart of a method for beam indication according to an embodiment of the present application;

FIG. 3 is a schematic diagram of a reconfigurable intelligent surface (RIS) cooperative transmission according to an embodiment of the present application;

FIG. 4 is a schematic structural diagram of a terminal according to an embodiment of the present application;

FIG. 5 is a schematic structural diagram of a network device according to an embodiment of the present application;

FIG. 6 is a first schematic structural diagram of an apparatus for beam indication according to an embodiment of the present application; and

FIG. 7 is a second schematic structural diagram of an apparatus for beam indication according to an embodiment of the present application.

DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In order to facilitate a clearer understanding for the solutions in embodiments of the present application, some contents related to the embodiments of the present application are first introduced.

(1) Introduction to reconfigurable intelligent surface (RIS)

As a candidate technology for the 6th generation mobile networks (6G), RIS has characteristics of low cost, low energy consumption, programmability, and easy deployment, etc. RIS is an electromagnetically active surface with communication capabilities, consisting of a large-scale device array and an array control module. The array control module may be used to control a response of each device unit to a radio signal, such as amplitude, phase, frequency, and polarization. By superimposing radio response signals of the device units on the large-scale device array, a specific beam propagation feature is formed on a macro scale, to form a controllable intelligent radio environment.

(2) Beam indication method of base station

**In** a new radio (NR) system, especially in a high frequency band, beamforming is used to transmit physical channels or physical signals. During a transmission, a network side notifies a terminal, through a beam indication, of a beam used by a certain physical channel or signal, and accordingly, the terminal may determine, based on an indication from the network side, a corresponding transmitting or receiving filter to transmit or receive a corresponding physical channel or signal.

In the physical layer specification, quasi-co-location (QCL) parameters for a fourth type (typeD) are used to characterize a beam. A QCL parameter is used to indicate whether a large-scale parameter between two reference signals are the same. The large-scale parameters include: doppler shift, doppler spread, average delay, delay spread and spatial reception filter parameter. Four types of QCL parameters are defined as follows:

first type (typeA): {doppler shift, doppler spread, average delay, delay spread};

second type (typeB): {doppler shift, doppler spread};

third type (typeC): {doppler shift, average delay}; and

fourth type (typeD): {spatial reception filter parameter}.

In case that two reference signals are quasi-co-located (QCL) with respect to typeD, it means that beams used by the two reference signals are the same. In a beam indication, a transmission configuration indication (TCI) state is used to indicate a QCL relationship between a physical channel or physical signal and other reference signals. Each bandwidth part (BWP) of each cell may be configured with up to M TCI states, each TCI state corresponds to a state identity (TCI state ID, corresponding to a higher layer parameter tci-StateId). In addition, each TCI state includes 1 or 2 QCL parameters, such as one QCL parameter is "typeA" and the other QCL parameter is "typeD". The network side uses a medium access control-control element (MAC-CE) signaling and/or downlink control information (DCI) signaling (such as a "Transmission Configuration Indication" field) to indicate one or more TCI states to a user equipment (UE). The MAC-CE signaling may include one or more groups of TCI state combinations. In case that the MAC-CE signaling includes multiple groups of TCI state combinations, the DCI signaling may also be used to indicate one of the TCI state combinations to the UE. In case that the TCI state combination includes only one TCI state, it indicates a single transmit/receive point (sTRP) transmission. In case that the TCI state combination includes multiple TCI states, it indicates a multiple transmit/receive points (mTRP) transmission or uplink and downlink joint beam indication.

(3) Beam indication method of network control repeater (NCR) system

In the Rel-18 NCR technical discussion, it is agreed that a beam indication includes an indication of a beam index, but there is no clear solution on how to indicate.

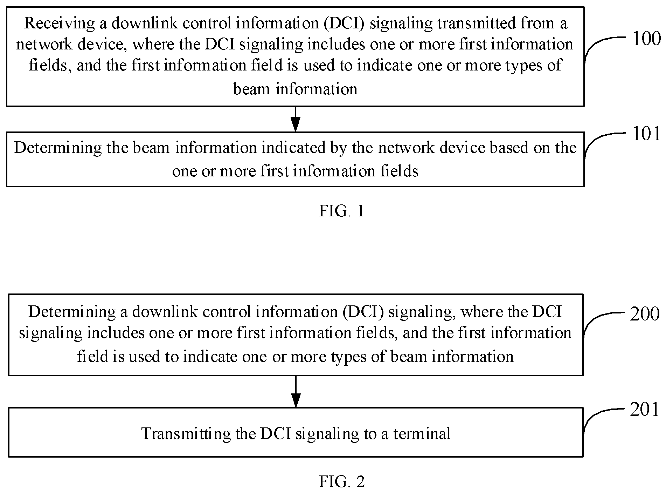

FIG. 1 is a first schematic flowchart of a method for beam indication according to an embodiment of the present application. The method is performed by a terminal. As shown in FIG. 1, the method includes the following steps:

step 100: receiving a downlink control information (DCI) signaling transmitted from a network device, where the DCI signaling includes one or more first information fields, and the first information field is used to indicate one or more types of beam information; and

step 101: determining the beam information indicated by the network device based on the one or more first information fields;

where the type of the beam information includes one or more of: beam index, transmission configuration indication (TCI) state, spatial relation information, wide beam index, or narrow beam index.

In an embodiment, in case that a traditional beam indication method is directly applied in a distributed RIS (also including NCR or relay, etc.) cooperative transmission scenario, the terminal may only receive a TCI state indication or only receive a beam index indication, but cannot receive the TCI state indication and the beam index indication simultaneously. Therefore, in case that multiple nodes (such as base stations or RIS) serve the terminal, it may cause a problem that the terminal is unable to correctly determine a serving beam for each physical channel or physical signal. An embodiment of the present application provides a method for beam indication, where the network device transmits a DCI signaling including one or more first information fields to the terminal, and any first information field indicates one or more types of beam information. The beam information is a type of information used for beam indication, such as beam index, TCI state, spatial relation information, wide beam index, narrow beam index, etc.
In some embodiments, the network device may select an independent indication way, and configure one or more first information fields in the DCI signaling, where each first information field separately indicates a different type of beam information. In the independent indication way, the first information fields corresponding to different types of beam information may be respectively referred to as beam index indication fields, TCI state indication fields, spatial relation information indication fields, wide beam index indication fields, narrow beam index indication fields, etc. For example, the network device configures two first information fields in the DCI signaling, the two first information fields are the TCI state indication field and the beam index indication field respectively, where the TCI state indication field only indicates the TCI state, and the beam index indication field only indicates the beam index.
In some embodiments, the network device may select a joint indication way, and configure only one first information field in the DCI signaling, where the first information field jointly indicates multiple types of beam information. For example, the network device configures only one first information field in the DCI signaling, and the first information field simultaneously indicates the TCI state and the beam index.
After receiving the DCI signaling, including one or more first information fields, transmitted from the network device, the terminal may determine one or more types of beam information indicated by the network device from the one or more first information fields.
In the method for beam indication provided by the embodiments of the present application, the DCI signaling including one or more first information fields is transmitted to the terminal from the network device, any first information field may indicate one or more types of beam information, and the terminal may determine the serving beam under different cooperative forms based on the beam information indicated by the network device in a reconfigurable intelligent surface (RIS) cooperative transmission scenario.
In some embodiments, before receiving the DCI signaling transmitted from the network device, the method further includes: receiving first configuration information transmitted from the network device.
In an embodiment, the network device may transmit the first configuration information to the terminal, where the first configuration information is configuration information related to the first information field in the DCI signaling.
Before receiving the DCI signaling transmitted from the network device, the terminal may receive the first configuration information transmitted from the network device to obtain the configuration information related to the first information field in the DCI signaling.

The above-mentioned first configuration information is used to configure one or more of the following.

(1) A quantity of the first information fields.

For example, in case that the DCI signaling transmitted from the network device to the terminal includes two first information fields, the network device may transmit the first configuration information to the terminal for indicating that the quantity of first information fields is 2.

In an embodiment, the quantity of the first information fields may be configured by including different higher layer parameters in the first configuration information. For example, a higher layer parameter *TCI-PresentInDCI* is included in the first configuration information to indicate whether the DCI signaling includes a TCI state indication field, and a higher layer parameter *Beamindex-PresentInDCI* is included in the first configuration information to indicate whether the DCI signaling includes a beam index indication field. In case that the first configuration information includes a higher layer parameter *TCI-PresentInDCI,* or the higher layer parameter *TCI-PresentInDCI* is in an enabled state, it means that the DCI signaling includes a TCI state indication field, otherwise the DCI signaling does not include a TCI state indication field; in case that the first configuration information includes a higher layer parameter *Beamindex-PresentInDCI,* or the higher layer parameter *Beamindex-PresentInDCI* is in an enabled state, it means that the DCI signaling includes a beam index indication field, otherwise the DCI signaling does not include a beam index indication field; in case that the first configuration information includes neither the higher layer parameter *TCI-PresentInDCI* nor the higher layer parameter *Beamindex-PresentInDCI,* there is no beam indication field in the DCI signaling (the quantity of the first information fields is 0); in case that the first configuration information includes the higher layer parameter *TCI-PresentInDCI* but does not include the higher layer parameter *Beamindex-PresentInDCI,* the DCI signaling includes one beam indication field, which is the TCI state indication field (the quantity of the first information fields is 1); in case that the first configuration information does not include the higher layer parameter *TCI-PresentInDCI* but includes the higher layer parameter *Beamindex-PresentInDCI,* the DCI signaling includes one beam indication field, which is the beam index indication field (the quantity of the first information fields is 1); in case that the first configuration information includes the higher layer parameter *TCI-PresentInDCI* and also includes the higher layer parameter *Beamindex-PresentInDCI,* the DCI signaling includes two beam indication fields, which are the TCI state indication field and the beam index indication field (the quantity of the first information fields is 2). After receiving the first configuration information, the terminal may determine the quantity of the first information fields included in the subsequently received DCI signaling based on the higher layer parameters.

(2) A quantity of pieces of beam information indicated by the first information field.

For example, in case that the DCI signaling transmitted from the network device to the terminal includes the TCI state indication field and the beam index indication field, and the TCI state indication field includes M1 TCI states and the beam index indication field includes N1 beam indexes, the network device may transmit the first configuration information to the terminal for indicating that the TCI state indication field includes M1 TCI states and the beam index indication field includes N1 beam indexes. Among the N1 beam indexes indicated by the beam index indication field, the first Q1 beam indexes may correspond to a wide beam type, and the last N1-Q1 beam indexes may correspond to a narrow beam type. The M1 TCI states and the N1 beam indexes are respectively associated with different links or physical channels or physical signals.

After receiving the first configuration information, the terminal may determine, based on the first configuration information, that in the subsequently received DCI signaling, the TCI state indication field indicates M1 TCI states, and the beam index indication field indicates N1 beam indexes (or determine that the beam index indication field indicates Q1 wide beam indexes and N1-Q1 narrow beam indexes).

(3) A type of beam information indicated by the first information field.

For example, in case that the DCI signaling transmitted from the network device to the terminal includes two first information fields, and the two information fields respectively indicate the TCI state and the beam index, the network device may transmit the first configuration information to the terminal for indicating the TCI state and the beam index respectively indicated by the two first information fields. After receiving the first configuration information, the terminal may determine, based on the first configuration information, that the first information field in the subsequently received DCI signaling indicates the TCI state and the beam index.

For another example, in case that the DCI signaling transmitted from the network device to the terminal includes only one first information field, and the first information field indicates both the TCI state and the beam index, the network device may transmit the first configuration information to the terminal to indicate that the first information field indicates both the TCI state and the beam index. After receiving the first configuration information, the terminal may determine, based on the first configuration information, that the first information field in the subsequently received DCI signaling indicates the TCI state and the beam index.

(4) A quantity of pieces of beam information of different types indicated by the first information field.

For example, in case that the DCI signaling transmitted from the network device to the terminal includes only one first information field, and the first information field simultaneously indicates two TCI states and two beam indexes, the network device may indicate, through the first configuration information, that the first information field indicates two TCI states and two beam indexes.

After receiving the first configuration information, the terminal may determine, based on the first configuration information, that the first information field included in the subsequently received DCI signaling indicates two TCI states and two beam indexes.

In some embodiments, in case that the first configuration information is used to configure the quantity of pieces of beam information indicated by the first information field, or used to configure the quantity of pieces of beam information of different types indicated by the first information field, determining the beam information indicated by the network device based on the one or more first information fields includes:

determining the beam information indicated by the network device based on the one or more first information fields and one or more second information fields included in the DCI signaling,

where the second information field is used to indicate valid beam information in the beam information indicated by the first information field.

In an embodiment, in case that the first configuration information is used to configure the quantity of pieces of beam information indicated by the first information field, or used to configure the quantity of pieces of beam information of different types indicated by the first information field, the quantity of pieces of beam information included in each first information field in the DCI signaling is fixed and does not change with dynamic signaling. In order to support dynamic transmit point selection, for example, only a base station serves a UE at a certain moment or only an RIS serves a UE at a certain moment, the network device may transmit a DCI signaling including one or more second information fields to the terminal to dynamically change valid beam information in the beam information indicated by the first information field, and the valid beam information refers to the beam information actually used in a transmission.

After receiving the DCI signaling including one or more second information fields, the terminal determines, based on the one or more second information fields, the valid beam information in the beam information indicated by one or more first information fields.

In case that there is one first information field, the second information field may be one or more, indicating the valid beam information jointly or separately. In case that there are multiple second information fields, the multiple second information fields respectively indicate the beam information of the first information field that is valid at different times; in case that there is one second information field, the second information field indicates the valid beam information in a corresponding first information field.

In case that there are multiple first information fields, the second information fields may be one or more, indicating the valid beam information jointly or separately. In case that there are multiple second information fields, each second information field may correspond to one first information field, indicating one type of beam information correspondingly; in case that there is one second information field, the beam valid information in the second information field is applicable to multiple first information fields.

In some embodiments, the second information field is used to indicate one or more of the following in the beam information indicated by the first information field:

a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.

In an embodiment, in case that the UE needs to determine an indication position of the beam information in the DCI signaling, the second information field may indicate the valid TCI state identity, the valid beam index, the valid spatial relation information index, the valid wide beam index, the valid narrow beam index and the valid type of beam information in the beam information indicated by the first information field.

For example, in case that the DCI signaling transmitted from the network device to the terminal includes one TCI state indication field and one beam index indication field, the TCI state indication field indicates two TCI states, and the beam index indication field indicates two beam indexes, Table 1 is a table of correspondence between an indication value of the second information field, the valid TCI state and the valid beam index, the network device may transmit a DCI signaling including one indication value of the second indication field to the terminal, and the second indication field jointly indicates the valid TCI state and the valid beam index based on the indication value in Table 1; or, Table 2 is a table of correspondence between an indication value of the second information field and the quantity of valid TCI states or the quantity of valid beam indexes, the network device may transmit a DCI signaling including two second indication fields to the terminal, one second indication field indicates the valid TCI state in the TCI states indicated by the TCI state indication field based on the indication value in Table 2, and the other second indication field indicates the valid beam index in the beam indexes indicated by the beam index indication field based on the indication value in Table 2.

In Table 1 and Table 2, the valid TCI state in the TCI state indication field or the valid beam index in the beam index indication field being "1" indicates that the first TCI state or the first beam index is valid; the valid TCI state in the TCI state indication field or the valid beam index in the beam index indication field being "2" indicates that the second TCI state or the second beam index is valid; the valid TCI state in the TCI state indication field or the valid beam index in the beam index indication field being "1,2" indicates that both the first TCI state and the second TCI state are valid, or both the first beam index and the second beam index are valid; the valid TCI state in the TCI state indication field or the valid beam index in the beam index indication field being "-" indicates that the TCI state indication field or the beam index indication field is not valid, and all TCI states or all beam indexes are not valid.

Table 1 Correspondence between indication value of second information field, valid TCI state and valid beam index

| Indication value of second information field | Valid TCI state in TCI state indication field | Valid beam index in beam index indication field |
|---|---|---|
| 0 | 1 | 1 |
| 1 | 1 | 2 |
| 2 | 2 | 1 |
| 3 | 2 | 2 |
| 4 | 1,2 | 1 |
| 5 | 1,2 | 2 |
| 6 | 1 | 1,2 |
| 7 | 2 | 1,2 |
| 8 | 1,2 | 1,2 |
| 9 | 1 | - |
| 10 | 2 | - |
| 11 | 1,2 | - |
| 12 | - | 1 |
| 13 | - | 2 |
| 14 | - | 1,2 |
| 15 | Reserved | Reserved |

Table 2 Correspondence between indication value of second information field and valid TCI state or valid beam index

| Indication value of second information field | Valid TCI state in TCI state indication field or valid beam index in beam index indication field |
|---|---|
| 0 | 1 |
| 1 | 2 |
| 2 | 1,2 |
| 3 | - |

In case that the UE only needs to determine the quantity of pieces of beam information and does not care about the indication position of the beam information in the DCI signaling (for example, in a single frequency network (SFN) transmission, the base station and/or RIS uses the same time-frequency resources to transmit the same data), the second information field may indicate the quantity of valid TCI states, the quantity of valid beam indexes, the quantity of pieces of valid spatial relation information, the quantity of valid wide beam indexes, the quantity of valid narrow beam indexes, and the valid type of beam information in the beam information indicated by the first information field.

For example, in case that the DCI signaling transmitted from the network device to the terminal includes one TCI state indication field and one beam index indication field, the TCI state indication field indicates two TCI states, and the beam index indication field indicates two beam indexes, Table 3 is a table of correspondence between the indication value of the second information field, the quantity of valid TCI states and the quantity of valid beam indexes. The network device may transmit a DCI signaling including one second indication field to the terminal, and the second information field jointly indicates the quantity of valid TCI states and the quantity of valid beam indexes based on the indication value in Table 3; or, Table 4 is a table of correspondence between the indication value of the second information field and the quantity of valid TCI states or the quantity of valid beam indexes, the network device may transmit a DCI signaling including two second indication fields to the terminal, one second indication field indicates the quantity of valid TCI states in the TCI states indicated by the TCI state indication field based on the indication value in Table 4, and the other second indication field indicates the quantity of valid beam indexes in the beam indexes indicated by the beam index indication field based on the indication value in Table 4.

In Table 3 and Table 4, the quantity of valid TCI states in the TCI state indication field or the quantity of valid beam indexes in the beam index indication field being "1" indicates that only one TCI state or one beam index is valid, and the first TCI state indicated by the TCI indication field is valid, or the first beam index indicated by the beam index indication field is valid; the quantity of valid TCI states in the TCI state indication field or the quantity of valid beam indexes in the beam index indication field being "2" indicates that two TCI states or two beam indexes are both valid, that is, the two TCI states indicated by the TCI indication field are both valid, or the two beam indexes indicated by the beam index indication field are both valid; the quantity of valid TCI states in the TCI state indication field or the quantity of valid beam indexes in the beam index indication field being "0" indicates that all TCI states or beam indexes are not valid, that is, the TCI state indication field is not valid or the beam index indication field is not valid.

Table 3 Correspondence between indication value of second information field, quantity of valid TCI states and quantity of valid beam indexes

| Indication value of second information field | Quantity of valid TCI states in TCI state indication field | Quantity of valid beam indexes in beam index indication field |
|---|---|---|
| 0 | 1 | 1 |
| 1 | 1 | 2 |
| 2 | 2 | 1 |
| 3 | 2 | 2 |
| 4 | 0 | 1 |
| 5 | 0 | 2 |
| 6 | 1 | 0 |
| 7 | 2 | 0 |

Table 4 Correspondence between indication value of second information field and quantity of valid TCI states or quantity of valid beam indexes

| Indication value of second information field | Quantity of valid TCI states in TCI state indication field or quantity of valid beam indexes in beam index indication field |
|---|---|
| 0 | 0 |
| 1 | 1 |
| 2 | 2 |
| 3 | Reserved |

It should be noted that a bit width of the second indication field may be determined based on the amount of information to be indicated, for example, it may be determined based on a quantity of beams or a bit width indicated by the first indication field. Some bits may be reserved for subsequent expansion.

In some embodiments, the method further includes:

receiving a medium access control-control element (MAC-CE) signaling transmitted from the network device, where the MAC-CE signaling is used to activate one or more beam information groups, and an activated beam information group includes one or more types of beam information.

In an embodiment, in case that the network device does not limit a specific quantity of beams corresponding to various types of beam information, the network device may transmit an MAC-CE signaling to the terminal to activate one or more beam information groups, and each activated beam information group includes one or more types of beam information. In some embodiments, activated beam information indicates an valid beam.

For example, in case that the network device configures the TCI state indication field in the DCI signaling to indicate at most M2 TCI states and the beam index indication field to indicate at most N2 beam indexes, P1 groups of TCI states and P2 groups of beam indexes may be activated through one or more MAC-CE signaling. Each group of TCI states or beam indexes may include at most M2 TCI states (i.e., it may be less than M2, indicating that the quantity of valid TCI state is less than M2, or it may be 0, indicating that no TCI state indication is performed), or at most N2 beam indexes (i.e., it may be less than N2, indicating that the quantity of valid beam indexes is less than N2, or it may be 0, indicating that no beam index indication is performed), and a network side may change a quantity of beams in each group based on a quantity of nodes that are actually in transmission.

For another example, in case that the network device only configures the type of beam information included in the DCI signaling, and does not limit the quantity of beams corresponding to various types of beam information, multiple groups (such as P groups) of beam information may be activated through an MAC-CE signaling. The quantity of TCI states and/or the quantity of beam indexes included in each group of beam information may be different. One group of beam information is indicated to the terminal using the DCI signaling, and the indicated group of beam information is valid for the terminal. In this way, there is no need to use other information fields to indicate the quantity of valid beams (quantity of TCI states or quantity of beam indexes) in the DCI signaling. In addition, the network device may dynamically switch the quantity of beams by indicating different beam groups.

After receiving the MAC-CE signaling, the terminal may determine the beam information indicated by the network device based on one or more beam information groups activated by the MAC-CE signaling.

In some embodiments, the beam information group is associated with first information indicated by the first information field; and

determining the beam information indicated by the network device based on the one or more first information fields includes:

determining the beam information indicated by the network device based on the first information indicated by the one or more first information fields, and an association relationship between the beam information group and the first information indicated by the first information field.

In an embodiment, after the network device transmits the MAC-CE signaling for activating one or more beam information groups to the terminal, the first information indicated by the first information field may be used to indicate the beam information group used in a transmission. The first information may be an indication value or a code point, and different first information corresponds to different beam information groups.

After one or more beam information groups are activated by the MAC-CE signaling, the terminal may determine the beam information group used for transmission based on the first information indicated by the first information field.

For example, the network device only configures the TCI state indication field in the DCI signaling to indicate at most M2 TCI states, and the beam index indication field to indicate at most N2 beam indexes. Furthermore, P1 groups of TCI states and P2 groups of beam indexes may be activated through one or more MAC-CE signaling. Since different information fields are used to transmit TCI state or beam index, P1 and P2 may not be equal. For example, the values of P1 and P2 are determined by a way of predefinition or a way of network device configuration, a bit width of a corresponding TCI state indication field is $\lceil \log_2 P1 \rceil$, and a width of a corresponding beam index indication field is $\lceil \log_2 P2 \rceil$ ( $\lceil \cdot \rceil$ means rounding up). Different values or indication values of the TCI state indication field correspond to different TCI state groups respectively, and different values or indication values of the beam index indication field correspond to different beam index groups respectively. A group of TCI states or a group of beam indexes used in a transmission is indicated by the first information indicated by the first information field in the DCI signaling.

For another example, the MAC-CE signaling activates 4 groups of beam information, corresponding to the code points "0", "1", "2", and "3" in the DCI signaling. A beam information group corresponding to code point "0" includes TCI 1 and TCI 29; a beam information group corresponding to code point "1" includes TCI 15 and beam index 3; a beam information group corresponding to code point "2" includes TCI 31, TCI 29, beam index 2 and beam index 19; a beam information group corresponding to code point "3" includes TCI 22, beam index 37 and beam index 9. In case that two base stations and two RISs serve the UE, the first information of the first information field may indicate code point "2"; in case that two base stations serve the UE, the first information of the first information field may indicate code point "0".

In some embodiments, beam information of different types are jointly numbered.

In an embodiment, in order to facilitate the MAC-CE signaling to activate the beam information groups including beam information of different types, beam information of different types may be jointly numbered to implicitly indicate the type of beam information.

For example, the TCI state and the beam index may be jointly numbered. As such, the UE may determine, through an indicated index range, whether a TCI state or a beam index is indicated. For example, a cell or a BWP is configured with M TCI states and N indexes, an index of the TCI state is from 0 to M-1, and an index of the beam index is from M to M+N-1. In case that the index value is between 0 to M-1, it indicates that the indicated type of beam information is the TCI state. In case that the index value is between M to M+N-1, it indicates that the indicated type of beam information is the beam index. In an embodiment, the index of the beam index is from 0 to N-1, and the index of the TCI state is from N to N+M-1. In case that the index value is between 0 to N-1, it indicates that the indicated type of beam information is the beam index. In case that the index value is between N to N+M-1, it indicates that the indicated type of beam information is the TCI state.

For another example, a cell or a BWP is configured with M TCI states, T1 wide beam indexes, and T2 narrow beam indexes, and the index of the TCI state is from 0 to M-1, the index of the wide beam index is from M to M+T1-1, and the index of the narrow beam index is from M+T1 to M+T1+T2-1; or the index of the TCI state is in the front, the index of the narrow beam index is in the middle, and the index of the wide beam index is in the end; or the index of the wide beam index or the narrow beam index is in the front, and the index of the TCI state is in the end, etc. In addition, a cell may also be configured with only the wide beam index and the TCI state, and the numbering ways of the wide beam index and the TCI state are similar.

In some embodiments, the method further includes:

determining a type of beam information activated by the MAC-CE signaling based on a sequence number of the beam information.

In an embodiment, after beam information of different types are jointly numbered, the terminal may determine the type of beam information activated by MAC-CE signaling based on an index range of the beam information. For example, in case that a cell or BWP is configured with M TCI states and N indexes, the index of the TCI state is from 0 to M-1, and the index of the beam index is from M to M+N-1, if there is beam information with an index of M-2 in the beam information group activated by the MAC-CE signaling, then the terminal may determine that the beam information is a TCI state.

In some embodiments, the MAC-CE signaling includes first indication information, and the first indication information is used to indicate a type of beam information.

In an embodiment, in case that the network device transmits an MAC-CE signaling to the terminal to activate one or more beam information groups, the first indication information may also be included in the MAC-CE signaling to directly indicate the type of each piece of beam information included in the one or more beam information groups.

For example, in case that the type of beam information configured by the network device only includes TCI state and beam index, for each piece of beam information, 1 bit is used in the MAC-CE to indicate the type of each piece of beam information, and multiple bits are used to indicate the activated beam index or TCI state identity (or TCI state ID value). The TCI state and beam index may be numbered separately. For example, a cell or a BWP is configured with at most M TCI states and at most N beam indexes, then the index of the TCI state is from 0 to M-1, and the value of the beam index is from 0 to N-1. Similarly, in case that the beam information configured by the network device includes TCI state, wide beam index and narrow beam index, for each beam information, 2 bits are used to indicate the beam type, and multiple bits are used to indicate the wide beam index, narrow beam index or TCI state identity.

In some embodiments, the DCI signaling includes second indication information, and the second indication information is used to indicate a type of beam information or a combination of types of beam information corresponding to the first information field.

In an embodiment, the DCI signaling including one or more first information fields transmitted from the network device to the terminal may also include the second indication information, and the second indication information may directly indicate the type of beam information or the combination of types of beam information corresponding to the one or more first information fields.

For example, the DCI signaling transmitted from the network device to the terminal includes the TCI state indication field, the beam index indication field and the second indication information. After receiving the DCI signaling, the terminal may directly determine, based on the second indication information, the TCI state and beam index respectively indicated by the two first information fields included in the DCI signaling.

For another example, the DCI signaling transmitted from the network device to the terminal includes a first information field indicating both the TCI state and the beam index, and the second indication information. After receiving the DCI signaling, the terminal may directly determine, based on the second indication information, that the first information field indicates the TCI state, or indicates the beam index, or indicates the combination of the TCI state and the beam index.

In some embodiments, the second indication information is a most significant bit of the first information field, or other information fields in the DCI signaling except the first information field.

In an embodiment, the second indication information may be the most significant bit (MSB) of the first information field, that is, the second indication information is carried in the first information field for transmission, and the most significant bit may be one or more bits, which is determined based on the quantity of types of beam information indicated in the DCI signaling. For example, in case that 2 bits are used to indicate a beam type, the most significant bit is 2 bits.

In an embodiment, different nodes are scheduled separately, and the beam information of each node may only include one beam type. For example, if the base station directly serves the UE, the DCI signaling may only include the TCI state indication; or if the base station serves the UE through the RIS, the DCI signaling may only include the beam index indication. In this case, only one first information field may be used to indicate the TCI state or beam index. The first information field includes 4 bits in total. The second indication information is a first bit (MSB) of the first information field. In case that this bit is "1", it indicates to perform the TCI state indication, and in case that this bit is "0", it indicates to perform the beam index indication; or in case that an identifier is "0", it indicates to perform the TCI state indication, and in case that an identifier is "1", it indicates to perform the beam index indication. In addition to the first bit occupied by the second indication information, the first information field also includes 3 bits (least significant bits, i.e., LSBs) to indicate the TCI state or beam index. These 3 bits may correspond to up to 8 groups of beam combinations activated by the MAC-CE signaling, and each combination includes multiple TCI states or multiple beam indexes.

In case that the DCI signaling includes multiple beam types, multiple most significant bits may also be used to indicate a combination of beam types included in the DCI signaling (for example, in case that the DCI signaling includes a TCI state indication, a wide beam index, and a narrow beam index, two most significant bits are used to indicate a combination of beam types included in the DCI signaling). In addition, the beam type information may also be carried in other information fields, except the beam indication field, for transmission.

In some embodiments, the method further includes:

determining, based on an association relationship between the beam information and a physical channel or physical signal, the physical channel or physical signal corresponding to the beam information indicated by the network device,

where the association relationship between the beam information and the physical channel or physical signal is predefined by a specification or determined based on second configuration information transmitted from the network device.

In an embodiment, after the terminal determines, based on the one or more first information fields included in the DCI signaling, the beam information indicated by the network device, a mechanism is required where the terminal may further determine to which links or physical channels/signals the beam information indicated by the network device corresponds. Accordingly, the terminal may use a correct receiving filter or transmitting filter to receive or transmit a corresponding physical channel/signal.

The association relationship between the beam information and the physical channel or physical signal may be determined by a rule predefined by a specification. After determining the beam information indicated by the network device, the terminal directly determines, based on the rule predefined by the specification, to which links or physical channels/signals the indicated beam information corresponds.

In addition, the association relationship between the beam information and the physical channel or physical signal may also be determined based on the second configuration information transmitted from the network device to the terminal. After determining the beam information indicated by the network device, the terminal determines, based on the second configuration information, to which links or physical channels/signals the indicated beam information corresponds.

In the method for beam indication provided by the embodiments of the present application, through the rule predefined by the specification or the second configuration information transmitted from the network device to the terminal, after the terminal determines the beam information indicated by the network device, the terminal may further determine, based on the rule predefined by the specification or the second configuration information, the physical channel or physical signal corresponding to the beam information.

In some embodiments, the association relationship between the beam information and the physical channel or physical signal includes an association relationship between an information field, the beam information, or the type of the beam information and one or more of the following.

(1) An uplink or downlink channel.

For example, the DCI signaling includes 2 TCI states and 2 beam indexes. An association relationship between the TCI states and the beam indexes indicated in the DCI signaling and the uplink channel or the downlink channel may be configured by a rule predefined by a specification or based on the second configuration information. The downlink channel refers to all downlink physical channels or signals, and the uplink channel refers to all uplink physical channels or signals; or the downlink channel refers to the downlink physical channel or signal using the beam information indicated in the DCI signaling, and the uplink channel refers to the uplink physical channel or signal using the beam information indicated in the DCI signaling, where which physical channels or signals using the beam information indicated in the DCI signaling are configured by higher layer signaling.

(2) A channel corresponding to a time index.

For example, the channel corresponding to the time index refers to a channel transmitted in different time units (slots). In case that the DCI signaling includes a TCI state indication field and a beam index indication field, an association relationship between the TCI state indication field and the beam index indication field and channels of a first time unit or channels of a second time unit may be configured by a rule predefined by the specification or based on the second configuration information. The channels of the first time unit or the channels of the second time unit refer to all physical channels or signals sent or transmitted in the first time unit or the second time unit; or refer to physical channels or signals sent or transmitted in the first time unit or the second time unit using the beam information indicated in the DCI signaling.

(3) A specific physical channel or physical signal.

For example, an association relationship between a beam and a physical channel may also be accurate to a certain physical channel or signal. The association relationship between the information field, the beam information or the type of the beam information and the specific physical channel or physical signal may be determined by a rule predefined by a specification or based on the second configuration information.

(4) Transmission occasion for a specific physical channel or physical signal.

For example, in case that multiple nodes perform time division multiplexing (TDM) transmission for a UE, the information field, the beam information or the type of the beam information corresponding to each transmission occasion may also be configured by a rule predefined by a specification or based on the second configuration information.

(5) A number of transmission layers of a specific physical channel or physical signal.

For example, in case that multiple nodes perform space division multiplexing (SDM) transmission for a UE, a beam for each number of transmission layer may be different, and the information field, the beam information or the type of the beam information, as well as the number of transmission layers of the specific physical channel or physical signal may be determined based on the second configuration information, such as layer group 1 (e.g. corresponding to layer 0 and layer 1) corresponding type 1 of beam information, and layer group 2 (e.g. corresponding to layer 2 and layer 3) corresponding to type 2 of beam information.
In some embodiments, the association relationship between the beam information and the physical channel or physical signal includes one or more of the following.

(1) A first TCI state and/or a first beam index indicated in the DCI signaling corresponds to a first channel, and a second TCI state and/or a second beam index indicated in the DCI signaling corresponds to a second channel.

For example, the DCI signaling includes two TCI states and two beam indexes, and a rule predefined by a specification or the second configuration information may configure the first TCI state and the first beam index indicated in the DCI signaling to correspond to the first channel, and the second TCI state and the second beam index indicated in the DCI signaling to correspond to the second channel. In this way, through the first information field in the DCI signaling, the terminal may determine four types of beam information and specific beam directions (or a corresponding filter coefficient), and then determine, based on a predefined rule or a configuration of a higher layer signaling, on which physical channel or signal the four beams (2 TCI states and 2 beam indexes) act, that is, determine on which physical resources the four beams act.
(2) A TCI state indication field in the DCI signaling corresponds to a first channel, and a beam index indication field in the DCI signaling corresponds to a second channel.
For example, the DCI signaling includes the TCI state indication field and the beam index indication field, and a rule predefined by a specification or the second configuration information may configure the TCI state indication field included in the DCI signaling to correspond to the first channel, and the beam index indication field in the DCI signaling to correspond to the second channel.
(3) A first valid TCI state and/or a first valid beam index indicated in the DCI signaling corresponds to a first channel, and a second valid TCI state and/or a second valid beam index indicated in the DCI signaling corresponds to a second channel.
For example, the DCI signaling includes two valid TCI states and two valid beam indexes, and a rule predefined by a specification or the second configuration information may configure the first valid TCI state and/or the first valid beam index indicated in the DCI signaling to correspond to the first channel, and the second valid TCI state and/or the second valid beam index corresponds to the second channel.

(4) A first piece of valid beam information indicated in the DCI signaling corresponds to a first channel, and a second piece of valid beam information corresponds to a second channel.

For example, the DCI signaling includes two pieces of valid beam information, and a rule predefined by a specification or the second configuration information may configure the first piece of valid beam information indicated in the DCI signaling to correspond to the first channel, and the second piece of valid beam information to correspond to the second channel.

It should be noted that the first channel and the second channel may be any two different channels, such as uplink or downlink channels, channels corresponding to different time indexes, different physical channels or physical signals, different transmission occasions of physical channels or physical signals, different numbers of transmission layers of physical channels or physical signals, etc.

FIG. 2 is a second schematic flowchart of a method for beam indication according to an embodiment of the present application. The method is performed by a network device. As shown in FIG. 2, the method includes the following steps:

   step 200: determining a downlink control information (DCI) signaling, where the DCI signaling includes one or more first information fields, and the first information field is used to indicate one or more types of beam information; and

   step 201: transmitting the DCI signaling to a terminal;

   where the type of the beam information includes one or more of: beam index, transmission configuration indication (TCI) state, spatial relation information, wide beam index, or narrow beam index.

In an embodiment, in case that a traditional beam indication method is directly applied in a distributed RIS (also including NCR or relay, etc.) cooperative transmission scenario, the terminal may only receive a TCI state indication or only receive a beam index indication, but cannot receive the TCI state indication and the beam index indication simultaneously. Therefore, in case that multiple nodes (such as base stations or RIS) serve the terminal, it may cause a problem that the terminal is unable to correctly determine a serving beam for each physical channel or physical signal. An embodiment of the present application provides a method for beam indication, where the network device transmits a DCI signaling including one or more first information fields to the terminal, and any first information field indicates one or more types of beam information. The beam information is a type of information used for beam indication, such as beam index, TCI state, spatial relation information, wide beam index, narrow beam index, etc.

In some embodiments, the network device may select an independent indication way, and configure one or more first information fields in the DCI signaling, where each first information field separately indicates a different type of beam information. In the independent indication way, the first information fields corresponding to different types of beam information may be respectively referred to as beam index indication fields, TCI state indication fields, spatial relation information indication fields, wide beam index indication fields, narrow beam index indication fields, etc. For example, the network device configures two first information fields in the DCI signaling, the two first information fields are the TCI state indication field and the beam index indication field respectively, where the TCI state indication field only indicates the TCI state, and the beam index indication field only indicates the beam index.

In some embodiments, the network device may select a joint indication way, and configure only one first information field in the DCI signaling, where the first information field jointly indicates multiple types of beam information. For example, the network device configures only one first information field in the DCI signaling, and the first information field simultaneously indicates the TCI state and the beam index.

After receiving the DCI signaling, including one or more first information fields, transmitted from the network device, the terminal may determine one or more types of beam information indicated by the network device from the one or more first information fields.

In the method for beam indication provided by the embodiments of the present application, the DCI signaling including one or more first information fields is transmitted to the terminal from the network device, any first information field may indicate one or more types of beam information, and the terminal may determine the serving beam under different cooperative forms based on the beam information indicated by the network device in a reconfigurable intelligent surface (RIS) cooperative transmission scenario.

In some embodiment, the method further includes: transmitting first configuration information to the terminal.

In an embodiment, the network device may transmit the first configuration information to the terminal, where the first configuration information is configuration information related to the first information field in the DCI signaling.

Before receiving the DCI signaling transmitted from the network device, the terminal may receive the first configuration information transmitted from the network device to obtain the configuration information related to the first information field in the DCI signaling.

The above-mentioned first configuration information is used to configure one or more of the following.

(1) A quantity of the first information fields.

For example, in case that the DCI signaling transmitted from the network device to the terminal includes two first information fields, the network device may transmit the first configuration information to the terminal for indicating that the quantity of first information fields is 2.

In an embodiment, the quantity of the first information fields may be configured by including different higher layer parameters in the first configuration information. For example, a higher layer parameter *TCI-PresentInDCI* is included in the first configuration information to indicate whether the DCI signaling includes a TCI state indication field, and a higher layer parameter *Beamindex-PresentInDCI* is included in the first configuration information to indicate whether the DCI signaling includes a beam index indication field. In case that the first configuration information includes a higher layer parameter *TCI-PresentInDCI,* or the higher layer parameter *TCI-PresentInDCI* is in an enabled state, it means that the DCI signaling includes a TCI state indication field, otherwise the DCI signaling does not include a TCI state indication field; in case that the first configuration information includes a higher layer parameter *Beamindex-PresentInDCI,* or the higher layer parameter *Beamindex-PresentInDCI* is in an enabled state, it means that the DCI signaling includes a beam index indication field, otherwise the DCI signaling does not include a beam index indication field; in case that the first configuration information includes neither the higher layer parameter *TCI-PresentInDCI* nor the higher layer parameter *Beamindex-PresentInDCI,* there is no beam indication field in the DCI signaling (the quantity of the first information fields is 0); in case that the first configuration information includes the higher layer parameter *TCI-PresentInDCI* but does not include the higher layer parameter *Beamindex-PresentInDCI,* the DCI signaling includes one beam indication field, which is the TCI state indication field (the quantity of the first information fields is 1); in case that the first configuration information does not include the higher layer parameter *TCI-PresentInDCI* but includes the higher layer parameter *Beamindex-PresentInDCI,* the DCI signaling includes one beam indication field, which is the beam index indication field (the quantity of the first information fields is 1); in case that the first configuration information includes the higher layer parameter *TCI-PresentInDCI* and also includes the higher layer parameter *Beamindex-PresentInDCI,* the DCI signaling includes two beam indication fields, which are the TCI state indication field and the beam index indication field (the quantity of the first information fields is 2). After receiving the first configuration information, the terminal may determine the quantity of the first information fields included in the subsequently received DCI signaling based on the higher layer parameters.

(2) A quantity of pieces of beam information indicated by the first information field.

For example, in case that the DCI signaling transmitted from the network device to the terminal includes the TCI state indication field and the beam index indication field, and the TCI state indication field includes M1 TCI states and the beam index indication field includes N1 beam indexes, the network device may transmit the first configuration information to the terminal for indicating that the TCI state indication field includes M1 TCI states and the beam index indication field includes N1 beam indexes. Among the N1 beam indexes indicated by the beam index indication field, the first Q1 beam indexes may correspond to a wide beam type, and the last N1-Q1 beam indexes may correspond to a narrow beam type. The M1 TCI states and the N1 beam indexes are respectively associated with different links or physical channels or physical signals.

After receiving the first configuration information, the terminal may determine, based on the first configuration information, that in the subsequently received DCI signaling, the TCI state indication field indicates M1 TCI states, and the beam index indication field indicates N1 beam indexes (or determine that the beam index indication field indicates Q1 wide beam indexes and N1-Q1 narrow beam indexes).

(3) A type of beam information indicated by the first information field.

For example, in case that the DCI signaling transmitted from the network device to the terminal includes two first information fields, and the two information fields respectively indicate the TCI state and the beam index, the network device may transmit the first configuration information to the terminal for indicating the TCI state and the beam index respectively indicated by the two first information fields. After receiving the first configuration information, the terminal may determine, based on the first configuration information, that the first information field in the subsequently received DCI signaling indicates the TCI state and the beam index.

For another example, in case that the DCI signaling transmitted from the network device to the terminal includes only one first information field, and the first information field indicates both the TCI state and the beam index, the network device may transmit the first configuration information to the terminal to indicate that the first information field indicates both the TCI state and the beam index. After receiving the first configuration information, the terminal may determine, based on the first configuration information, that the first information field in the subsequently received DCI signaling indicates the TCI state and the beam index.

(4) A quantity of pieces of beam information of different types indicated by the first information field.

For example, in case that the DCI signaling transmitted from the network device to the terminal includes only one first information field, and the first information field simultaneously indicates two TCI states and two beam indexes, the network device may indicate, through the first configuration information, that the first information field indicates two TCI states and two beam indexes.

After receiving the first configuration information, the terminal may determine, based on the first configuration information, that the first information field included in the subsequently received DCI signaling indicates two TCI states and two beam indexes.

In some embodiments, in case that the first configuration information is used to configure the quantity of pieces of beam information indicated by the first information field, or used to configure the quantity of pieces of beam information of different types indicated by the first information field, the DCI signaling further includes one or more second information fields, and the second information field is used to indicate valid beam information in the beam information indicated by the first information field.

In an embodiment, in case that the first configuration information is used to configure the quantity of pieces of beam information indicated by the first information field, or used to configure the quantity of pieces of beam information of different types indicated by the first information field, the quantity of pieces of beam information included in each first information field in the DCI signaling is fixed and does not change with dynamic signaling. In order to support dynamic transmit point selection, for example, only a base station serves a UE at a certain moment or only an RIS serves a UE at a certain moment, the network device may transmit a DCI signaling including one or more second information fields to the terminal to dynamically change valid beam information in the beam information indicated by the first information field, and the valid beam information refers to the beam information actually used in a transmission.

After receiving the DCI signaling including one or more second information fields, the terminal determines, based on the one or more second information fields, the valid beam information in the beam information indicated by one or more first information fields.

In case that there is one first information field, the second information field may be one or more, indicating the valid beam information jointly or separately. In case that there are multiple second information fields, the multiple second information fields respectively indicate the beam information of the first information field that is valid at different times; in case that there is one second information field, the second information field indicates the valid beam information in a corresponding first information field.

In case that there are multiple first information fields, the second information fields may be one or more, indicating the valid beam information jointly or separately. In case that there are multiple second information fields, each second information field may correspond to one first information field, indicating one type of beam information correspondingly; in case that there is one second information field, the beam valid information in the second information field is applicable to multiple first information fields.

In some embodiments, the second information field is used to indicate one or more of the following in the beam information indicated by the first information field:

a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.

In an embodiment, in case that the UE needs to determine an indication position of the beam information in the DCI signaling, the second information field may indicate the valid TCI state identity, the valid beam index, the valid spatial relation information index, the valid wide beam index, the valid narrow beam index and the valid type of beam information in the beam information indicated by the first information field.

For example, in case that the DCI signaling transmitted from the network device to the terminal includes one TCI state indication field and one beam index indication field, the TCI state indication field indicates two TCI states, and the beam index indication field indicates two beam indexes, Table 1 is a table of correspondence between an indication value of the second information field, the valid TCI state and the valid beam index, the network device may transmit a DCI signaling including one indication value of the second indication field to the terminal, and the second indication field jointly indicates the valid TCI state and the valid beam index based on the indication value in Table 1; or, Table 2 is a table of correspondence between an indication value of the second information field and the quantity of valid TCI states or the quantity of valid beam indexes, the network device may transmit a DCI signaling including two second indication fields to the terminal, one second indication field indicates the valid TCI state in the TCI states indicated by the TCI state indication field based on the indication value in Table 2, and the other second indication field indicates the valid beam index in the beam indexes indicated by the beam index indication field based on the indication value in Table 2.

In Table 1 and Table 2, the valid TCI state in the TCI state indication field or the valid beam index in the beam index indication field being "1" indicates that the first TCI state or the first beam index is valid; the valid TCI state in the TCI state indication field or the valid beam index in the beam index indication field being "2" indicates that the second TCI state or the second beam index is valid; the valid TCI state in the TCI state indication field or the valid beam index in the beam index indication field being "1,2" indicates that both the first TCI state and the second TCI state are valid, or both the first beam index and the second beam index are valid; the valid TCI state in the TCI state indication field or the valid beam index in the beam index indication field being "-" indicates that the TCI state indication field or the beam index indication field is not valid, and all TCI states or all beam indexes are not valid.

In case that the UE only needs to determine the quantity of pieces of beam information and does not care about the indication position of the beam information in the DCI signaling (for example, in a single frequency network (SFN) transmission, the base station and/or RIS uses the same time-frequency resources to transmit the same data), the second information field may indicate the quantity of valid TCI states, the quantity of valid beam indexes, the quantity of pieces of valid spatial relation information, the quantity of valid wide beam indexes, the quantity of valid narrow beam indexes, and the valid type of beam information in the beam information indicated by the first information field.

For example, in case that the DCI signaling transmitted from the network device to the terminal includes one TCI state indication field and one beam index indication field, the TCI state indication field indicates two TCI states, and the beam index indication field indicates two beam indexes, Table 3 is a table of correspondence between the indication value of the second information field, the quantity of valid TCI states and the quantity of valid beam indexes. The network device may transmit a DCI signaling including one second indication field to the terminal, and the second information field jointly indicates the quantity of valid TCI states and the quantity of valid beam indexes based on the indication value in Table 3; or, Table 4 is a table of correspondence between the indication value of the second information field and the quantity of valid TCI states or the quantity of valid beam indexes, the network device may transmit a DCI signaling including two second indication fields to the terminal, one second indication field indicates the quantity of valid TCI states in the TCI states indicated by the TCI state indication field based on the indication value in Table 4, and the other second indication field indicates the quantity of valid beam indexes in the beam indexes indicated by the beam index indication field based on the indication value in Table 4.

In Table 3 and Table 4, the quantity of valid TCI states in the TCI state indication field or the quantity of valid beam indexes in the beam index indication field being "1" indicates that only one TCI state or one beam index is valid, and the first TCI state indicated by the TCI indication field is valid, or the first beam index indicated by the beam index indication field is valid; the quantity of valid TCI states in the TCI state indication field or the quantity of valid beam indexes in the beam index indication field being "2" indicates that two TCI states or two beam indexes are both valid, that is, the two TCI states indicated by the TCI indication field are both valid, or the two beam indexes indicated by the beam index indication field are both valid; the quantity of valid TCI states in the TCI state indication field or the quantity of valid beam indexes in the beam index indication field being "0" indicates that all TCI states or beam indexes are not valid, that is, the TCI state indication field is not valid or the beam index indication field is not valid.

It should be noted that a bit width of the second indication field may be determined based on the amount of information to be indicated, for example, it may be determined based on a quantity of beams or a bit width indicated by the first indication field. Some bits may be reserved for subsequent expansion.

In some embodiments, the method further includes:
transmitting a medium access control-control element (MAC-CE) signaling to the terminal, where the MAC-CE signaling is used to activate one or more beam information groups, and an activated beam information group includes one or more types of beam information.

In an embodiment, in case that the network device does not limit a specific quantity of beams corresponding to various types of beam information, the network device may transmit an MAC-CE signaling to the terminal to activate one or more beam information groups, and each activated beam information group includes one or more types of beam information. In some embodiments, activated beam information indicates an valid beam.

For example, in case that the network device configures the TCI state indication field in the DCI signaling to indicate at most M2 TCI states and the beam index indication field to indicate at most N2 beam indexes, P1 groups of TCI states and P2 groups of beam indexes may be activated through one or more MAC-CE signaling. Each group of TCI states or beam indexes may include at most M2 TCI states (i.e., it may be less than M2, indicating that the quantity of valid TCI state is less than M2, or it may be 0, indicating that no TCI state indication is performed), or at most N2 beam indexes (i.e., it may be less than N2, indicating that the quantity of valid beam indexes is less than N2, or it may be 0, indicating that no beam index indication is performed), and a network side may change a quantity of beams in each group based on a quantity of nodes that are actually in transmission.

For another example, in case that the network device only configures the type of beam information included in the DCI signaling, and does not limit the quantity of beams corresponding to various types of beam information, multiple groups (such as P groups) of beam information may be activated through an MAC-CE signaling. The quantity of TCI states and/or the quantity of beam indexes included in each group of beam information may be different. One group of beam information is indicated to the terminal using the DCI signaling, and the indicated group of beam information is valid for the terminal. In this way, there is no need to use other information fields to indicate the quantity of valid beams (quantity of TCI states or quantity of beam indexes) in the DCI signaling. In addition, the network device may dynamically switch the quantity of beams by indicating different beam groups.

After receiving the MAC-CE signaling, the terminal may determine the beam information indicated by the network device based on one or more beam information groups activated by the MAC-CE signaling.

In some embodiments, the beam information group is associated with first information indicated by the first information field.

In an embodiment, after the network device transmits the MAC-CE signaling for activating one or more beam information groups to the terminal, the first information indicated by the first information field may be used to indicate the beam information group used in a transmission. The first information may be an indication value or a code point, and different first information corresponds to different beam information groups.

After one or more beam information groups are activated by the MAC-CE signaling, the terminal may determine the beam information group used for transmission based on the first information indicated by the first information field.

For example, the network device only configures the TCI state indication field in the DCI signaling to indicate at most M2 TCI states, and the beam index indication field to indicate at most N2 beam indexes. Furthermore, P1 groups of TCI states and P2 groups of beam indexes may be activated through one or more MAC-CE signaling. Since different information fields are used to transmit TCI state or beam index, P1 and P2 may not be equal. For example, the values of P1 and P2 are determined by a way of predefinition or a way of network device configuration, a bit width of a corresponding TCI state indication field is $\lceil \log_2 P1 \rceil$, and a width of a corresponding beam index indication field is $\lceil \log_2 P2 \rceil$ ( $\lceil \cdot \rceil$ means rounding up). Different values or indication values of the TCI state indication field correspond to different TCI state groups respectively, and different values or indication values of the beam index indication field correspond to different beam index groups respectively. A group of TCI states or a group of beam indexes used in a transmission is indicated by the first information indicated by the first information field in the DCI signaling.

For another example, the MAC-CE signaling activates 4 groups of beam information, corresponding to the code points '0', '1', '2', and '3' in the DCI signaling. A beam information group corresponding to code point '0' includes TCI 1 and TCI 29; a beam information group corresponding to code point '1' includes TCI 15 and beam index 3; a beam information group corresponding to code point '2' includes TCI 31, TCI 29, beam index 2 and beam index 19; a beam information group corresponding to code point '3' includes TCI 22, beam index 37 and beam index 9. In case that two base stations and two RISs serve the UE, the first information of the first information field may indicate code point "2"; in case that two base stations serve the UE, the first information of the first information field may indicate code point "0".

In some embodiments, beam information of different types are jointly numbered.

In an embodiment, in order to facilitate the MAC-CE signaling to activate the beam information groups including beam information of different types, beam information of different types may be jointly numbered to implicitly indicate the type of beam information.

For example, the TCI state and the beam index may be jointly numbered. As such the UE may determine, through an indicated index range, whether a TCI state or a beam index is indicated. For example, a cell or a BWP is configured with M TCI states and N indexes, an index of the TCI state is from 0 to M-1, and an index of the beam index is from M to M+N-1. In case that the index value is between 0 to M-1, it indicates that the indicated type of beam information is the TCI state. In case that the index value is between M to M+N-1, it indicates that the indicated type of beam information is the beam index. In an embodiment, the index of the beam index is from 0 to N-1, and the index of the TCI state is from N to N+M-1. In case that the index value is between 0 to N-1, it indicates that the indicated type of beam information is the beam index. In case that the index value is between N to N+M-1, it indicates that the indicated type of beam information is the TCI state.

For another example, a cell or a BWP is configured with M TCI states, T1 wide beam indexes, and T2 narrow beam indexes, and the index of the TCI state is from 0 to M-1, the index of the wide beam index is from M to M+T1-1, and the index of the narrow beam index is from M+T1 to M+T1+T2-1; or the index of the TCI state is in the front, the index of the narrow beam index is in the middle, and the index of the wide beam index is in the end; or the index of the wide beam index or the narrow beam index is in the front, and the index of the TCI state is in the end, etc. In addition, a cell may also be configured with only the wide beam index and the TCI state, and the numbering ways of the wide beam index and the TCI state are similar.

In some embodiments, the MAC-CE signaling includes first indication information, and the first indication information is used to indicate a type of beam information.

In an embodiment, in case that the network device transmits an MAC-CE signaling to the terminal to activate one or more beam information groups, the first indication information may also be included in the MAC-CE signaling to directly indicate the type of each piece of beam information included in the one or more beam information groups.

For example, in case that the type of beam information configured by the network device only includes TCI state and beam index, for each piece of beam information, 1 bit is used in the MAC-CE to indicate the type of each piece of beam information, and multiple bits are used to indicate the activated beam index or TCI state identity (or TCI state ID value). The TCI state and beam index may be numbered separately. For example, a cell or a BWP is configured with at most M TCI states and at most N beam indexes, then the index of the TCI state is from 0 to M-1, and the value of the beam index is from 0 to N-1. Similarly, in case that the beam information configured by the network device includes TCI state, wide beam index and narrow beam index, for each beam information, 2 bits are used to indicate the beam type, and multiple bits are used to indicate the wide beam index, narrow beam index or TCI state identity.

In some embodiments, the DCI signaling includes second indication information, and the second indication information is used to indicate a type of beam information or a combination of types of beam information corresponding to the first information field.

In an embodiment, the DCI signaling including one or more first information fields transmitted from the network device to the terminal may also include the second indication information, and the second indication information may directly indicate the type of beam information or the combination of types of beam information corresponding to the one or more first information fields.

For example, the DCI signaling transmitted from the network device to the terminal includes the TCI state indication field, the beam index indication field and the second indication information. After receiving the DCI signaling, the terminal may directly determine, based on the second indication information, the TCI state and beam index respectively indicated by the two first information fields included in the DCI signaling.

For another example, the DCI signaling transmitted from the network device to the terminal includes a first information field indicating both the TCI state and the beam index, and the second indication information. After receiving the DCI signaling, the terminal may directly determine, based on the second indication information, that the first information field indicates the TCI state, or indicates the beam index, or indicates the combination of the TCI state and the beam index.

In some embodiments, the second indication information is a most significant bit of the first information field, or other information fields in the DCI signaling except the first information field.

In an embodiment, the second indication information may be the most significant bit (MSB) of the first information field, that is, the second indication information is carried in the first information field for transmission, and the most significant bit may be one or more bits, which is determined based on the quantity of types of beam information indicated in the DCI signaling. For example, in case that 2 bits are used to indicate a beam type, the most significant bit is 2 bits.

In an embodiment, different nodes are scheduled separately, and the beam information of each node may only include one beam type. For example, if the base station directly serves the UE, the DCI signaling may only include the TCI state indication; or if the base station serves the UE through the RIS, the DCI signaling may only include the beam index indication. In this case, only one first information field may be used to indicate the TCI state or beam index. The first information field includes 4 bits in total. The second indication information is a first bit (MSB) of the first information field. In case that this bit is "1", it indicates to perform the TCI state indication, and in case that this bit is "0", it indicates to perform the beam index indication; or in case that an identifier is "0", it indicates to perform the TCI state indication, and in case that an identifier is "1", it indicates to perform the beam index indication. In addition to the first bit occupied by the second indication information, the first information field also includes 3 bits (least significant bits, i.e., LSBs) to indicate the TCI state or beam index. These 3 bits may correspond to up to 8 groups of beam combinations activated by the MAC-CE signaling, and each combination includes multiple TCI states or multiple beam indexes.

In case that the DCI signaling includes multiple beam types, multiple most significant bits may also be used to indicate a combination of beam types included in the DCI signaling (for example, in case that the DCI signaling includes a TCI state indication, a wide beam index, and a narrow beam index, two most significant bits are used to indicate a combination of beam types included in the DCI signaling). In addition, the beam type information may also be carried in other information fields, except the beam indication field, for transmission.

In some embodiments, the method further includes:
transmitting second configuration information to the terminal, where the second configuration information is used to configure an association relationship between the beam information and a physical channel or physical signal.

In an embodiment, after the terminal determines, based on the one or more first information fields included in the DCI signaling, the beam information indicated by the network device, a mechanism is required where the terminal may further determine to which links or physical channels/signals the beam information indicated by the network device corresponds. Accordingly, the terminal may use a correct receiving filter or transmitting filter to receive or transmit a corresponding physical channel/signal.

The network device may transmit, to the terminal, the second configuration information for configuring the association relationship between the beam information and the physical channel or the physical signal. After determining the beam information indicated by the network device, the terminal may determine, based on the second configuration information, to which links or physical channels/signals the indicated beam information corresponds.

In the method for beam indication provided by the embodiments of the present application, the network device transmits the second configuration information to the terminal, and after determining the beam information indicated by the network device, the terminal may further determine, based on the second configuration information, the physical channel or physical signal corresponding to the beam information.

In some embodiments, the association relationship between the beam information and the physical channel or physical signal includes an association relationship between an information field, the beam information, or the type of the beam information and one or more of the following.

(1) An uplink or downlink channel.

For example, the DCI signaling includes 2 TCI states and 2 beam indexes. An association relationship between the TCI states and the beam indexes indicated in the DCI signaling and the uplink channel or the downlink channel may be configured based on the second configuration information. The downlink channel refers to all downlink physical channels or signals, and the uplink channel refers to all uplink physical channels or signals; or the downlink channel refers to the downlink physical channel or signal using the beam information indicated in the DCI signaling, and the uplink channel refers to the uplink physical channel or signal using the beam information indicated in the DCI signaling, where which physical channels or signals using the beam information indicated in the DCI signaling are also configured by higher layer signaling.

(2) A channel corresponding to a time index.

For example, the channel corresponding to the time index refers to a channel transmitted in different time units (slots). In case that the DCI signaling includes a TCI state indication field and a beam index indication field, an association relationship between the TCI state indication field and the beam index indication field and channels of a first time unit or channels of a second time unit may be configured based on the second configuration information. The channels of the first time unit or the channels of the second time unit refer to all physical channels or signals sent or transmitted in the first time unit or the second time unit; or refer to a physical channels or signals sent or transmitted in the first time unit or the second time unit using the beam information indicated in the DCI signaling.

(3) A specific physical channel or physical signal.

For example, an association relationship between a beam and a physical channel may also be accurate to a certain physical channel or signal. The association relationship between the information field, the beam information or the type of the beam information and the specific physical channel or physical signal may be determined based on the second configuration information.

(4) Transmission occasion for a specific physical channel or physical signal.

For example, in case that multiple nodes perform TDM transmission for a UE, the information field, the beam information or the type of the beam information corresponding to each transmission occasion may also be configured based on the second configuration information.

(5) A number of transmission layers of a specific physical channel or physical signal.

For example, in case that multiple nodes perform SDM transmission for a UE, a beam for each number of transmission layers may be different, and the information field, the beam information or the type of the beam information, as well as the number of transmission layers of the specific physical channel or physical signal may be determined based on the second configuration information, such as layer group 1 (e.g. corresponding to layer 0 and layer 1) corresponding type 1 of beam information, and layer group 2 (e.g. corresponding to layer 2 and layer 3) corresponding to type 2 of beam information.

In some embodiments, the association relationship between the beam information and the physical channel or physical signal includes one or more of the following.

(1) A first TCI state and/or a first beam index indicated in the DCI signaling corresponds to a first channel, and a second TCI state and/or a second beam index indicated in the DCI signaling corresponds to a second channel.

For example, the DCI signaling includes two TCI states and two beam indexes, and the second configuration information may configure the first TCI state and the first beam index indicated in the DCI signaling to correspond to the first channel, and the second TCI state and the second beam index indicated in the DCI signaling to correspond to the second channel. In this way, through the first information field in the DCI signaling, the terminal may determine four types of beam information and specific beam directions (or a corresponding filter coefficient), and then determine, based on a configuration of a higher layer signaling, on which physical channel or signal the four beams (2 TCI states and 2 beam indexes) act, that is, determine on which physical resources the four beams act.

(2) A TCI state indication field in the DCI signaling corresponds to a first channel, and a beam index indication field in the DCI signaling corresponds to a second channel.

For example, the DCI signaling includes the TCI state indication field and the beam index indication field, and the second configuration information may configure the TCI state indication field included in the DCI signaling to correspond to the first channel, and the beam index indication field in the DCI signaling to correspond to the second channel.

(3) A first valid TCI state and/or a first valid beam index indicated in the DCI signaling corresponds to a first channel, and a second valid TCI state and/or a second valid beam index indicated in the DCI signaling corresponds to a second channel.

For example, the DCI signaling includes two valid TCI states and two valid beam indexes, and the second configuration information may configure the first valid TCI state and/or the first valid beam index indicated in the DCI signaling to correspond to the first channel, and the second valid TCI state and/or the second valid beam index corresponds to the second channel.

(4) A first piece of valid beam information indicated in the DCI signaling corresponds to a first channel, and a second piece of valid beam information corresponds to a second channel.

For example, the DCI signaling includes two pieces of valid beam information, and the second configuration information may configure the first piece of valid beam information indicated in the DCI signaling to correspond to the first channel, and the second piece of valid beam information to correspond to the second channel.

It should be noted that the first channel and the second channel may be any two different channels, such as uplink or downlink channels, channels corresponding to different time indexes, different physical channels or physical signals, different transmission occasions of physical channels or physical signals, different numbers of transmission layers of physical channels or physical signals, etc.

The methods provided by the embodiments of the present application are based on the same conception, the implementations of the methods may be referred to each other, and the same part is not repeated.

The methods provided in the above embodiments of the present application are illustrated below by using embodiments in specific application scenarios.

Embodiment 1: a network device configures M TCI states and N beam indexes for each BWP or each carrier component (CC) of a UE, and uses two or more first information fields to indicate the TCI states or beam indexes respectively, where each first information field indicates one or more TCI states, or one or more beam indexes.

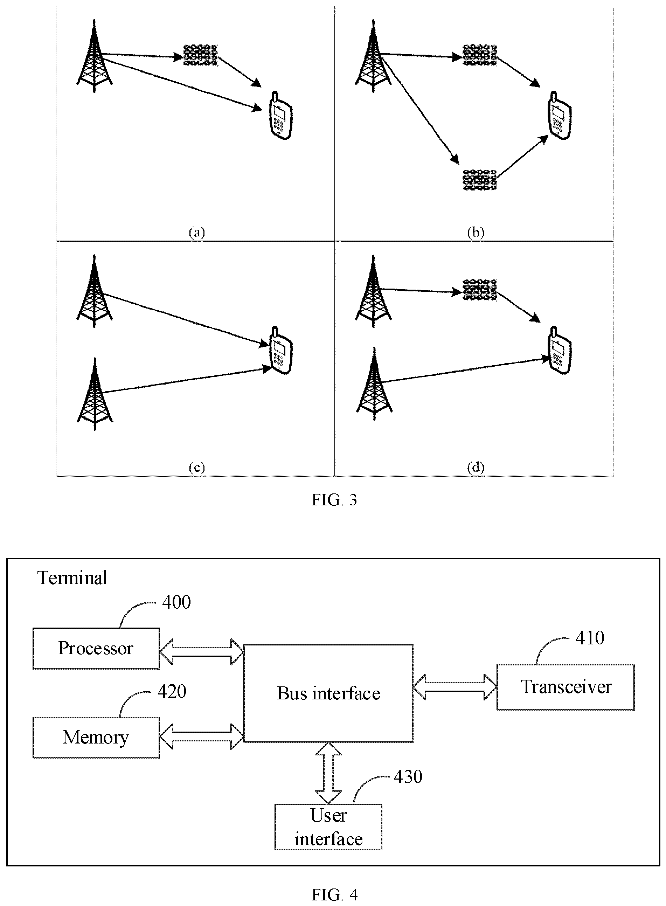

A DCI signaling includes two information fields, the two information fields are a TCI state indication field and a beam index indication field. A network side indicates a quantity of information fields through a higher layer signaling, such as a higher layer parameter *TCI-PresentInDCI* used to indicate whether the DCI includes a TCI state indication field, and a higher layer parameter *Beamindex-PresentInDCI* used to indicate whether the DCI includes a beam index indication field. In this way, whether 2 information fields exist may be indicated separately. FIG. 3 is a schematic diagram of a reconfigurable intelligent surface (RIS) cooperative transmission according to an embodiment of the present application. As shown in FIG. 3 (a), a base station and an RIS serve the UE together, and the DCI signaling needs to include both the TCI state indication field and the beam index indication field; as shown in FIG. 3 (b), only RISs serve the UE, and the DCI only needs to include the beam index indication field; as shown in FIG. 3 (c), only base stations serve the UE, and the DCI only needs to include the TCI state indication field; as shown in FIG.3 (d), a base station directly serve the UE, and another base station serves the UE through an RIS, and the DCI needs to include both the TCI state indication field and the beam index indication field.

A terminal determines beam information indicated by the network device and a link or physical channel/signal corresponding to the beam information based on the following methods.

Method 1-1: a quantity of beams (a quantity of TCI states or a quantity of beam indexes) included in each information field is determined based on a configuration of a higher layer signaling from the network side.

For example, the network side uses a higher layer signaling to configure, based on a deployment situation, for the terminal, the TCI state indication field to include M1 TCI states and the beam index indication field to include N1 beam indexes. The M1 TCI states and the N1 beam indexes are respectively associated with different links or physical channels or physical signals. For another example, among the N1 beam indexes indicated by the beam index indication field, the first Q1 beam indexes correspond to a wide beam type, and the last N1-Q1 beam indexes correspond to a narrow beam type.

Since the quantity of TCI states and the quantity of beam indexes are configured by higher layer signaling, they do not change with dynamic signaling. In order to support dynamic transmit/receive points selection, for example, only the base station serves the UE at a certain time, and only the RIS serves the UE at a certain time, an indication of beam-related information may be dynamically changed through the following mechanisms.

Mechanism 1: a valid TCI state in the TCI state indication field and a valid beam index in the beam index indication field are jointly indicated using other information fields.

For example, the TCI state indication field indicates two TCI states, and the beam index indication field indicates two beam indexes. Another information field, such as a dynamic switching field (also referred to as a dynamic indication field, a dynamic information indication field, etc.) is used to indicate the valid beam information for the two information fields, such as the indication of the dynamic indication field as shown in Table 5, where the valid TCI state in the TCI state indication field or the valid beam index in the beam index indication field being "1" indicates that the first TCI state or the first beam index is valid, being "2" indicates that the second TCI state or the second beam index is valid, being "1, 2" indicates that both the first TCI state and the second TCI state are valid, or both the first beam index and the second beam index are valid, and being "-" indicates that the TCI state indication field or the beam index indication field is not valid, and all TCI states or all beam indexes are not valid.

Table 5 Bit width of dynamic indication field being 4 bits

| Indication value of dynamic indication field | Valid TCI state in TCI state indication field | Valid beam index in beam index indication field |
| --- | --- | --- |
| 0 | 1 | 1 |
| 1 | 1 | 2 |
| 2 | 2 | 1 |
| 3 | 2 | 2 |
| 4 | 1,2 | 1 |
| 5 | 1,2 | 2 |
| 6 | 1 | 1,2 |
| 7 | 2 | 1,2 |
| 8 | 1,2 | 1,2 |
| 9 | 1 | - |
| 10 | 2 | - |
| 11 | 1,2 | - |
| 12 | - | 1 |
| 13 | - | 2 |
| 14 | - | 1,2 |
| 15 | Reserved | Reserved |

For another example, in SFN transmission, the base station and/or RIS uses the same time-frequency resources to transmit the same data. The UE only needs to determine a quantity of pieces of beam information, and does not care about an indication position of the beam information in the DCI. As such, the valid beam information may always be the first few TCI states or the first few beam indexes in the TCI state indication field or the beam index indication field. For example, assuming that the TCI state indication field indicates 2 TCI states and the beam index indication field indicates 2 beam indexes, which TCI states are valid may be determined based on Table 6. In Table 6, the quantity of valid TCI states in the TCI state indication field or the quantity of valid beam indexes in the beam index indication field being "1" indicates that only one TCI state or one beam index is valid, and the first TCI state indicated by the TCI indication field is valid, or the first beam index indicated by the beam index indication field is valid, being "2" indicates that two TCI states or two beam indexes are valid, that is, both the two TCI states indicated by the TCI indication field are valid, or both the two beam indexes indicated by the beam index indication field are valid, and being 0 indicates that all TCI states or beam indexes are not valid, that is, at this time only the base station serves the UE, or only the RIS serves the UE.

Table 6 Bit width of dynamic indication field being 3 bits

| Indication value of dynamic indication field | Quantity of valid TCI states in TCI state indication field | Quantity of valid beam indexes in beam index indication field |
| --- | --- | --- |
| 0 | 1 | 1 |
| 1 | 1 | 2 |
| 2 | 2 | 1 |

(continued)

| Indication value of dynamic indication field | Quantity of valid TCI states in TCI state indication field | Quantity of valid beam indexes in beam index indication field |
|---|---|---|
| 3 | 2 | 2 |
| 4 | 0 | 1 |
| 5 | 0 | 2 |
| 6 | 1 | 0 |
| 7 | 2 | 0 |

In case that the TCI state indication field or the beam index indication field only indicates one TCI state or one beam index, the indication of the dynamic indication field may be as shown in Table 5a and Table 6a.

Table 5a Bit width of dynamic indication field being 4 bits

| Indication value of dynamic indication field | Valid TCI state in TCI state indication field | Valid beam index in beam index indication field |
|---|---|---|
| 0 | 1 | - |
| 1 | - | 1 |
| 2 | 1 | 1 |
| 9-15 | Reserved | Reserved |

Table 6a Bit width of dynamic indication field being 2 bits

| Indication value of dynamic indication field | Quantity of valid TCI states in TCI state indication field | Quantity of valid beam indexes in beam index indication field |
|---|---|---|
| 0 | 1 | 1 |
| 1 | 0 | 1 |
| 2 | 1 | 0 |
| 3 | Reserved | Reserved |

In case that the TCI state indication field indicates 1 TCI state, and the beam index indication field indicates 2 beam indexes, or in case that the TCI state indication field indicates 2 TCI states, and the beam index indication field indicates 1 beam index, the indication method is similar.

In case that the network side includes three beam types, such as TCI state, wide beam (corresponding to a wide beam index), and narrow beam (corresponding to a narrow beam index), the DCI may include three beam indication related information fields, namely, TCI state indication field, wide beam index indication field, and narrow beam index indication field. Each information field may indicate one or more TCI states or wide beam indexes or narrow beam indexes. A specific quantity of indicated beams depends on a configuration of a higher layer signaling. Similarly, another information field may be used to jointly indicate a beam validity situation of the three information fields.

Mechanism 2: a valid TCI state in the TCI state indication field and a valid beam index in the beam index indication field are respectively indicated using other information fields.

For example, a dynamic information indication field 1 (also referred to as a dynamic indication field 1) is used to indicate the valid TCI state in the TCI state indication field, and a dynamic information indication field 2 (also referred to as a dynamic indication field 2) is used to indicate the valid beam index in the beam index indication field. For example, in case that the TCI state indication field indicates two TCI states and the beam index indication field indicates two beam indexes, the indications of the two indication fields may be as shown in Table 7 or Table 8.

Table 7 Bit width being 2 bits

| Indication value of dynamic indication field 1 or dynamic indication field 2 | Valid TCI state in TCI state indication field or valid beam index in beam index indication field |
|---|---|
| 0 | 1 |

(continued)

| Indication value of dynamic indication field 1 or dynamic indication field 2 | Valid TCI state in TCI state indication field or valid beam index in beam index indication field |
|---|---|
| 1 | 2 |
| 2 | 1,2 |
| 3 | - |

Table 8 Bit width being 2 bits

| Indication value of dynamic indication field 1 or dynamic indication field 2 | Quantity of valid TCI states in TCI state indication field or quantity of valid beam indexes in beam index indication field |
|---|---|
| 0 | 0 |
| 1 | 1 |
| 2 | 2 |
| 3 | Reserved |

Table 7 indicates that the valid TCI state or beam index is the first, the second, or the first and the second, or all TCI states or beam indexes are not valid, and Table 8 indicates that the quantity of valid TCI states or beam indexes is one, two, or zero. In case that one TCI state or beam index is valid, it indicates that the first TCI state or the first beam index indicated by the TCI state indication field or the beam index indication field is valid. In case that two TCI states or beam indexes are valid, it indicates that both the two TCI states or two beam indexes indicated by the TCI state indication field or the beam index indication field are valid.

In case that the TCI state indication field indicates one TCI state and the beam index indication field indicates one beam index, the indications of the two indication fields may be as shown in Table 7a or Table 8a.

Table 7a Bit width being 1 bit

| Indication value of dynamic indication field 1 or dynamic indication field 2 | Valid TCI state in TCI state indication field or valid beam index in beam index indication field |
|---|---|
| 0 | 1 |
| 1 | - |

Table 8a Bit width being 1 bit

| Indication value of dynamic indication field 1 or dynamic indication field 2 | Quantity of valid TCI states in TCI state indication field or quantity of valid beam indexes in beam index indication field |
|---|---|
| 0 | 0 |
| 1 | 1 |

The quantity (M1) of TCI states indicated by the TCI state indication field and the quantity (N2) of beam indexes indicated by the beam index indication field may be different. Accordingly, the bit widths of the dynamic indication field 1 and the dynamic indication field 2 may also be different. The UE determines the bit widths of the dynamic indication field 1 and the dynamic indication field 2 based on the values of the parameters M1 and M2 configured by the network side.

In case that the network side includes three beam types, such as TCI state, wide beam (corresponding to a wide beam index), and narrow beam (corresponding to a narrow beam index), the DCI may include three beam indication related information fields, namely, TCI state indication field, wide beam index indication field, and narrow beam index indication field. Similarly, three other information fields may be used to indicate the beam validity situation of the TCI state indication field, the wide beam index indication field, and the narrow beam index indication field, respectively.

Method 1-2: a quantity of beams (a quantity of TCI states or a quantity of beam indexes) included in each information field is determined based on an indication of an MAC-CE signaling.

For example, a higher layer signaling configures, for the UE, the TCI state indication field to indicate at most M1 TCI states, and the beam index indication field to indicate at most N1 beam indexes. Further, P1 groups of TCI state and P2 groups of beam index may be activated through one or more MAC-CE signaling. Each group corresponds to a codepoint in a corresponding information field in the DCI, that is, an indicated state in the DCI. Since different information fields are used to transmit TCI states or beam indexes, P1 and P2 may not be equal. For example, the values of P1 and P2 are determined by a predefined way or a network side configured way, a bit width of a corresponding TCI state indication field is $\lceil \log_2 P1 \rceil$, and a width of a corresponding beam index indication field is $\lceil \log_2 P2 \rceil$.

Each group of TCI states or beam indexes may include at most M1 TCI states (i.e., it may be less than M1, or may be 0, where being 0 indicates that no TCI state indication is performed), or N1 beam indexes (i.e., it may be less than N1, or may be 0, where being 0 indicates that no beam index indication is performed), and the network side may change a quantity of beams in each group based on a quantity of nodes in actual transmission. Furthermore, a group of TCI states or a group of beam indexes used in transmission is indicated by a DCI.

In case that one information field is used to indicate both a wide beam index and a narrow beam index simultaneously, a beam type may be carried in the MAC-CE signaling or the DCI signaling, and the beam type includes at least one of a wide beam type and a narrow beam type. A specific design may be referred to a scheme of using one information field for joint beam indication in embodiment 2.

Embodiment 2: a network device configures M TCI states and N beam indexes for each BWP or each CC of a UE, and uses one information field to jointly indicate the TCI states and/or beam indexes, and the information field indicates one or more TCI states and/or one or more beam indexes.

The UE determines a type of beam information, a quantity of beams, and specific beam information included in a DCI signaling through at least one of the following methods.

Method 2-1: the type of beam information and/or the quantity of beams included in a DCI signaling is configured through a higher layer signaling for a UE.

A configured beam type includes one of the following: TCI state indication, beam index indication, TCI state and beam index indication; or a beam type included in the beam indication related information field (such as a multiplexed TCI state indication information field) in the DCI configured by the higher layer signaling, and a quantity of beams corresponding to each beam type. For example, a network side configures, for the UE, a DCI to include a TCI state indication and a beam index indication, the TCI state indication indicates 2 TCI states, and the beam index indication indicates 2 beam indexes. In this case, an MAC-CE activates multiple groups of beam information, each group of beam information includes 2 TCI state indications and 2 beam index indications. Accordingly, the DCI signaling indicates one group of beam information among the multiple groups of beam information, that is, a information field in the DCI also indicates 2 TCI states and 2 beam index indications.

Since the quantity of beams included in the DCI signaling is fixed, in case that the network side performs dynamic point selection or switches to a single-node working mode, other mechanisms are still needed to indicate, to the UE, the quantity of beams (quantity of TCI states or quantity of beam indexes) actually served. In this case, mechanism 1 and mechanism 2 under method 1-1 in embodiment 1 are still applicable, that is, a quantity of valid beams in a beam-related information field is indicated by another information field or other information fields.

In case that another information field is used, a valid beam type may also be indicated in other information fields. For example, in case that a beam-related indication field in the DCI indicates 2 TCI states and 2 beam indexes, the indications of other indication fields may also be as shown in Table 9 and Table 10. Type A indicates TCI state indication, and type B indicates beam index indication.

Table 9 Bit width of dynamic indication field being 4 bits

| Indication value of dynamic indication field | Valid beam type | Valid TCI state in TCI state indication field | Valid beam index in beam index indication field |
|---|---|---|---|
| 0 | Type A and Type B | 1 | 1 |
| 1 | Type A and Type B | 1 | 2 |
| 2 | Type A and Type B | 2 | 1 |
| 3 | Type A and Type B | 2 | 2 |
| 4 | Type A and Type B | 1,2 | 1 |
| 5 | Type A and Type B | 1,2 | 2 |
| 6 | Type A and Type B | 1 | 1,2 |
| 7 | Type A and Type B | 2 | 1,2 |
| 8 | Type A and Type B | 1,2 | 1,2 |

(continued)

| Indication value of dynamic indication field | Valid beam type | Valid TCI state in TCI state indication field | Valid beam index in beam index indication field |
|---|---|---|---|
| 9 | Type A | 1 | - |
| 10 | Type A | 2 | - |
| 11 | Type A | 1,2 | - |
| 12 | Type B | - | 1 |
| 13 | Type B | - | 2 |
| 14 | Type B | - | 1,2 |
| 15 | Reserved | Reserved | Reserved |

Table 10 Bit width of dynamic indication field being 3 bits

| Indication value of dynamic indication field | Valid beam type | Quantity of valid TCI states in TCI state indication field | Quantity of valid beam indexes in beam index indication field |
|---|---|---|---|
| 0 | Type A and Type B | 1 | 1 |
| 1 | Type A and Type B | 1 | 2 |
| 2 | Type A and Type B | 2 | 1 |
| 3 | Type A and Type B | 2 | 2 |
| 4 | Type B | 0 | 1 |
| 5 | Type B | 0 | 2 |
| 6 | Type A | 1 | 0 |
| 7 | Type A | 2 | 0 |

In case that the beam indication related information field indicates 1 TCI state and 1 beam index, the indication of other information fields may be as shown in Table 9a. In this case, there is no need to indicate the valid TCI state, or the valid beam index, or the quantity of valid TCI states, or the quantity of valid beam indexes.

Table 9a Bit width of dynamic indication field being 2 bits

| Indication value of dynamic indication field | Valid beam type |
|---|---|
| 0 | Type A and Type B |
| 1 | Type A |
| 2 | Type B |
| 3 | Reserved |

In some embodiments, the beam type also includes a wide beam type, a narrow beam type, a spatial relation information (a beam type used in an uplink beam indication in NR Rel-15), etc., and the beam type indicated by the dynamic indication field may also include type C, type D, type E, etc.

Method 2-2: the type of beam information included in the DCI signaling is configured through a higher layer signaling for a UE, and a beam corresponding to a supported beam information type is indicated through an MAC-CE signaling.

In this method, the higher layer signaling only configures the beam information type included in the DCI, without limiting a quantity of beams corresponding to various beam information types. Multiple groups (such as P groups) of beam information are activated through the MAC-CE. A quantity of TCI states and/or a quantity of beam indexes included in each group of beam information may be different. In this way, there is no need to use other information fields to indicate a quantity of valid beams (quantity of TCI states or quantity of beam indexes) in the DCI. In addition, the network side may dynamically switch the quantity of beams by indicating different beam groups.

For example, an MAC-CE signaling activates 4 groups of beam information, corresponding to code points "0", "1", "2", and "3" in the DCI respectively:

beam group corresponding to code point "0": TCI 1, and TCI 29;

beam group corresponding to code point "1": TCI 15, and beam index 3;

beam group corresponding to code point "2": TCI 31, TCI 29, beam index 2, and beam index 19; and

beam group corresponding to code point "3": TCI 22, beam index 37, and beam index 9.

In case that the network side indicates that 2 base stations and 2 RISs serve the UE, code point "2" may be indicated; in case that the network side indicates that 2 base stations serve the UE, code point "0" may be indicated.

To implement the above indication way, a TCI state (TCI state ID) and a beam index may be jointly numbered, and the UE may determine, through an indicated index range, whether the TCI state or the beam index is indicated. For example, a cell or a BWP is configured with M TCI states and N indexes, an index (ID) of the TCI state is from 0 to M-1, and an index of the beam index is from M to M+N-1, in case that the index value is from 0 to M-1, it indicates that the indicated beam is the TCI state, and in case that the index value is from M to M+N-1, it indicates that the indicated beam is the beam index; or an index of the beam index is from 0 to N-1, and an index (ID) of the TCI state is from N to N+M-1, in case that the index value is from 0 to N-1, it indicates that the indicated beam is the beam index, and in case that the index value is from N to N+M-1, it indicates that the indicated beam is the TCI state.

For another example, a cell or a BWP is configured with M TCI states, T1 beam indexes associated with a wide beam type, and T2 indexes associated with a narrow beam type. In this example, an index of the TCI state is from 0 to M-1, a beam index associated with the wide beam type is from M to M+T1-1, and a beam index associated with the narrow beam type is from M+T1 to M+T1+T2-1; or an index (ID) of the TCI state is in the front, a beam index associated with the narrow beam type is in the middle, and a beam index associated with the wide beam type is in the end; or, an index associated with the wide beam type or the narrow beam type is in the front, and an index (ID) of the TCI state is in the end, etc., and the present application does not limit this. In addition, a cell can also be configured with only a wide beam index and a TCI state, and a numbering method for the beam index and the TCI state identity is similar.

In some embodiments, a beam-related type may also be directly indicated in an MAC-CE signaling. For example, the type includes one or more of TCI state, beam index, wide beam index, and narrow beam index. In case that the beam type configured by the network side includes only TCI state and beam index, for each beam, 1 bit is used in MAC-CE to indicate the beam type, and multiple bits are used to indicate a beam index or TCI state identity (ID). In this case, the TCI state and beam index may be numbered separately. For example, a cell or a BWP is configured with at most M TCI states and at most N beam indexes, then the index of the TCI state is from 0 to M-1, and a value of the beam index is from 0 to N-1. Similarly, in case that the beam type configured by the network side includes TCI state, wide beam type, and narrow beam type, for each beam, 2 bits are used to indicate the beam type, and multiple bits are used to indicate the wide beam index or narrow beam index or TCI state identity.

Method 2-3: the type of included beam information and/or beam is indicated through the DCI signaling.

In some cases, similar to a scheduling way based on multiple DCI in mTRP, different nodes perform scheduling separately, and the beam information in each node may only include one beam form. If the base station directly serves the UE, the DCI may only include the TCI state indication; if the base station serves the UE through RIS, the DCI may only include the beam index indication. In this case, an information field may be used to indicate the TCI state or beam index, and a 1-bit identifier is introduced to indicate whether the information field indicates the TCI state or the beam index, or a 2-bit identifier is introduced to indicate whether the information field indicates the TCI state, the wide beam index, or the narrow beam index. In addition to the identifier information, the information field includes one or more indications for TCI state or beam index.

For example, an identification bit is the first bit of the information field, that is, the MSB. In case that the identifier is "1", it indicates that the TCI state is indicated, and in case that the identifier is "0", it indicates that the beam index is indicated; or in case that the identifier is "0", it indicates that the TCI state is indicated, and in case that the identifier is "1", it indicates that the beam index is indicated.

For another example, the information field includes 4 bits in total, that is, the bit width is 4. In addition to the identification bit, it also includes 3 bits (LSB) to indicate the TCI state or beam index. The indication method is similar to the related art, that is, up to 8 groups of beam combinations are activated through MAC-CE signaling, and each combination includes multiple TCI states or multiple beam indexes.

In addition, the TCI state and/or beam index may also be indicated by joint coding. For example, it is assumed that only one TCI state and one beam index are indicated in DCI, or only one TCI state combination (one of multiple TCI state combinations activated by an MAC-CE) and one beam index combination (one of multiple beam index combinations activated by an MAC-CE) are indicated in DCI. A method similar to an indication for time domain resource allocation or frequency domain resource allocation may be used to jointly indicate multiple types of beams, that is, both the beam type and the beam are indicated through the DCI.

For another example, in case that the DCI includes multiple beam types, multiple identification bits may also be used to indicate the combination of beam types included in the DCI. For example, in case that the DCI includes a TCI state (type A), a wide beam index (type B) and a narrow beam index (type C), the beam type may be indicated through Table 11. The beam type may also be placed in other information fields except the beam indication field for indication, such as method 1-1 and method 2-1 in embodiment 1 and embodiment 2.

Table 11 Bit width of indication field being 3 bits

| Indication value of information field | Beam type |
|---|---|
| 0 | Type A |
| 1 | Type B |
| 2 | Type C |
| 3 | Type A, B |
| 4 | Type A, C |
| 5 | Type B, C |
| 6-7 | Reserved |

Embodiment 3: an association between a beam index or TCI state and a link or physical channel/signal is determined.

Based on the methods of embodiment 1 and embodiment 2, a UE may determine what the beam information indicated by the DCI signaling is. However, a mechanism is still needed to allow the UE to determine to which link or physical channel/signal the indicated beam information corresponds. Accordingly, the UE may use a correct receiving filter or transmitting filter to receive or transmit a corresponding physical channel/signal.

Method A: a network side configures an association relationship between indicated beam information and a physical channel or signal through a higher layer signaling.

For example, in case that a quantity of beams indicated in the DCI signaling is fixed, such as a quantity of beams is determined based on an indication from the network side (method 1-1 and method 2-1), or in case that a quantity of beams indicated in the DCI signaling is not fixed, the association relationship between the indicated beam and the physical channel/signal may be determined based on the indication from the network device.

The network device indicates a physical channel/signal corresponding to each beam information through a higher layer signaling, and a corresponding relationship may be as follows.

A1: an association between an information field, beam or beam type and an uplink or downlink channel

In case that the DCI includes 2 TCI states and 2 beam indexes, the network side configures the first TCI state and the first beam index indicated in the DCI to correspond to the downlink channel, and the second TCI state and the second beam index to correspond to the uplink channel. The downlink channel refers to all physical channels or signals in the downlink, and the uplink channel refers to all physical channels or signals in the uplink.

In this way, through the beam-related indication field in the DCI, the UE may determine types of 4 beam information and specific beam directions (or a corresponding filter coefficient), and then determine, based on a configuration of a higher layer signaling, on which physical channel or signal the 4 beams act, that is, determine on which physical resources the 4 beams act.

For another example, for the downlink, the UE is served through the RIS, and for the uplink, the UE communicates directly with the base station, the network side may configure, for the UE, the beam index indicated in the DCI to be associated with the downlink channel, and the TCI state (or a spatial relation information) indicated in the DCI to be associated with the uplink channel, that is, a certain type corresponds to a type of channel. Similarly, the first information field (or TCI state indication field) corresponds to the uplink channel, and the second information field (or beam index indication field) corresponds to the downlink channel.

A2: an association between an information field, beam or beam type and a channel corresponding to a time index

In the RIS or a relay system, since there are multi-hop channels and different channels may be transmitted in different time units, such as the base station and RIS serve the UE through time division multiplexing, a higher layer parameter may also configure an association of each information field, beam or beam type and a channel corresponding to a time index. For example, a TCI state indication field corresponds to channels for a first time unit, and a beam index indication field corresponds to channels for a second time unit. The channels for the first time unit or the channels for the second time unit refer to all physical channels or signals sent or transmitted in the first time unit or the second time unit. For another example, in case that the network side only configures beam indication for downlink or uplink, physical channels corresponding to an n-th time unit may also refer to all downlink channels transmitted in the n-th time unit. For another example, the network side configures each information field or each beam or each beam type to correspond to the uplink or downlink channels in an n-th time unit, that is, an association relationship between a beam indication and an uplink or downlink channel corresponding to a time index is configured using one signaling, that is, a combination of the methods of A1 and A2.

A3: an association relationship between an information field, beam or beam type and a specific channel/signal or transmission occasion or number of transmission layers

In addition, an association relationship between a beam and a physical channel may also be accurate to a level of a certain physical channel or signal, or a transmission occasion or number of transmission layers of the physical channel.

For example, in case that multiple nodes perform SDM transmission for a UE, a beam for each number of layers may be different, such as layer group 1 corresponds to beam type 1, and layer group 2 corresponds to beam type 2; or control resource set (CORESET) i corresponds to beam indication information field 1, and CORESET j corresponds to beam indication information field 2. In case that multiple nodes perform TDM transmission for a UE, the information field, beam, or beam type corresponding to each transmission occasion may also be configured by a higher layer signaling. For example, the network side configures layer group 1 (such as an SRS resource set) of a PUSCH to correspond to beam indication information field 1 or beam type A, and layer group 2 of the PUSCH corresponds to beam indication information field 2 or beam type C.

In addition, the network side may also configure, for the UE, the indicated beam information to be associated with a certain physical channel in an n-th time unit or a transmission layer or transmission occasion of a certain physical channel, that is, a combination of the methods of A1 and A3.

Method B: an association relationship between indicated beam information and a physical channel or signal is determined based on a predefined rule.

For example, in case that a quantity of beams indicated in the DCI is not fixed, such as a quantity of beams included in each codepoint activated by an MAC-CE is different (such as method 1-2, method 2-2 and method 2-3), the UE may determine a physical channel/signal corresponding to each piece of beam information based on a predefined rule, and a corresponding relationship may be as follows.

B1: an association relationship between beam information (information field, beam or beam type) and an uplink or downlink channel

For example, DCI includes 2 TCI states and 2 beam indexes. The UE determines, based on the predefined rule, that a first TCI state and a first beam index indicated in the DCI correspond to a downlink channel, and a second TCI state and a second beam index correspond to an uplink channel. The downlink channel refers to all physical channels or signals in the downlink, and the uplink channel refers to all physical channels or signals in the uplink.

For example, a first valid TCI state and a first valid beam index indicated in the DCI correspond to a downlink channel, and a second valid TCI state and a second valid beam index correspond to an uplink channel.

For example, a first valid beam (TCI state or spatial relation information, or beam index, etc.) indicated in the DCI corresponds to a downlink channel, and a second valid beam (TCI state or spatial relation information, or beam index, etc.) corresponds to an uplink channel.

B2: an association relationship between beam information (information field, beam or beam type) and a channel corresponding to a time index

For example, the UE may determine, based on a transmission way, that the channels corresponding to different time units are different. For example, in case that the UE is served by a base station in a first time unit, and the UE is served by an RIS in a second time unit, the UE may determine, based on a predefined rule, that the physical channel or signal for the first time unit is associated with the TCI state indication (including the spatial relation information indication), and the physical channel or signal for the second time unit is associated with the beam index indication (including the wide beam index or the narrow beam index).

B3: an association relationship between beam information (information field, beam or beam type) and a specific channel/signal or transmission occasion or number of transmission layers

For example, the UE determines that layer group 1 (for example, corresponding to a code division multiplexing (CDM) group with a lowest demodulation reference signal (DMRS) port) of a PDSCH is associated with an indicated beam type B, and layer group 2 (corresponding to a CDM group other than the CDM group with the lowest DMRS port) of the PDSCH is associated with an indicated beam type A; or the network side configures 2 pieces of physical uplink shared channel configuration information (PUSCH-config), each parameter corresponding to a beam indication information field, and accordingly, the UE determines that a PUSCH transmitted based on PUSCH-config parameter 1 is associated with beam indication information field 1, and a PUSCH transmitted based on PUSCH-config parameter 2 is associated with beam indication information field 2.

In this embodiment, the UE determines, based on an association relationship between a physical channel/signal and a beam, beam information corresponding to a certain channel or transmission occasion of a channel or a transmission layer of a channel, and then uses the determined beam information for transmission.

The methods and devices provided by the embodiments of the present application are based on the same conception, the implementation of the devices and methods may be referred to each other since the principles of the methods and devices for solving problems are similar, and the same part is not repeated.

FIG. 4 is a schematic structural diagram of a terminal according to an embodiment of the present application. As shown in FIG. 4, the terminal includes a memory 420, a transceiver 410 and a processor 400, where the processor 400 and memory 420 may be physically arranged separately.

The memory 420 is used for storing a computer program, and the transceiver 410 is used for receiving and transmitting data under control of the processor 400.

In an embodiment, the transceiver 410 is used for receiving and transmitting data under control of the processor 400.

In FIG. 4, a bus architecture may include any number of interconnected buses and bridges, which are linked together through various circuits of one or more processors represented by the processor 400 and one or more memories represented by the memory 420. The bus architecture may also link together various other circuits, such as peripherals, voltage regulators, and power management circuits, etc., which are well known in the art, and therefore are not further described in the present application. The bus interface provides an interface. The transceiver 410 may include multiple elements, i.e., including a transmitter and a receiver, units for providing communication with various other devices over transmission media including wireless channels, wired channels, fiber optic cables, and the like. For different user equipment, a user interface 430 may be an interface capable of externally or internally connecting the required device, and the connected device includes, but not limited to, a keypad, a display, a speaker, a microphone, a joystick, and the like.

The processor 400 is responsible for managing the bus architecture and general processing, and the memory 420 may store data used by the processor 400 when performing operations.

The processor 400 may be a central processing unit (CPU), an application specific integrated circuit (ASIC), a field-programmable gate array (FPGA), or a complex programmable logic device (CPLD), the processor may also use a multi-core architecture.

The processor 400 calls the computer program stored in the memory 420 to execute any of the methods performed by the terminal provided by the embodiments of the present application in accordance with the obtained executable instructions. The method includes: receiving a downlink control information (DCI) signaling transmitted from a network device, where the DCI signaling includes one or more first information fields, and the first information field is used to indicate one or more types of beam information; and determining the beam information indicated by the network device based on the one or more first information fields; where the type of the beam information includes one or more of: beam index, transmission configuration indication (TCI) state, spatial relation information, wide beam index, or narrow beam index.

In some embodiments, before receiving the DCI signaling transmitted from the network device, the method further includes:

receiving first configuration information transmitted from the network device, where the first configuration information is used to configure one or more of:

a quantity of the first information fields;

a quantity of pieces of beam information indicated by the first information field;

a type of beam information indicated by the first information field; or

a quantity of pieces of beam information of different types indicated by the first information field.

In some embodiments, in case that the first configuration information is used to configure the quantity of pieces of beam information indicated by the first information field, or used to configure the quantity of pieces of beam information of different types indicated by the first information field, determining the beam information indicated by the network device based on the one or more first information fields includes:

determining the beam information indicated by the network device based on the one or more first information fields and one or more second information fields included in the DCI signaling,

where the second information field is used to indicate valid beam information in the beam information indicated by the first information field.

In some embodiments, the second information field is used to indicate one or more of in the beam information indicated by the first information field:

a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.

In some embodiments, the method further includes:

receiving a medium access control-control element (MAC-CE) signaling transmitted from the network device, where the MAC-CE signaling is used to activate one or more beam information groups, and an activated beam information group includes one or more types of beam information.

In some embodiments, the beam information group is associated with first information indicated by the first information field; and

determining the beam information indicated by the network device based on the one or more first information fields includes:

determining the beam information indicated by the network device based on the first information indicated by the one or more first information fields, and an association relationship between the beam information group and the first information indicated by the first information field.

In some embodiments, beam information of different types are jointly numbered.

In some embodiments, the method further includes:

determining a type of beam information activated by the MAC-CE signaling based on a sequence number of the beam information.

In some embodiments, the MAC-CE signaling includes first indication information, and the first indication information is used to indicate a type of beam information.

In some embodiments, the DCI signaling includes second indication information, and the second indication information is used to indicate a type of beam information or a combination of types of beam information corresponding to the first information field.

In some embodiments, the second indication information is a most significant bit of the first information field, or other information fields in the DCI signaling except the first information field.

In some embodiments, the method further includes:

determining, based on an association relationship between the beam information and a physical channel or physical signal, the physical channel or physical signal corresponding to the beam information indicated by the network device,

where the association relationship between the beam information and the physical channel or physical signal is predefined by a specification or determined based on second configuration information transmitted from the network device.

In some embodiments, the association relationship between the beam information and the physical channel or physical signal includes an association relationship between an information field, the beam information, or the type of the beam information and one or more of:

an uplink or downlink channel;

a channel corresponding to a time index;

a specific physical channel or physical signal;

a transmission occasion for a specific physical channel or physical signal; or

a number of transmission layers of a specific physical channel or physical signal.

In some embodiments, the association relationship between the beam information and the physical channel or physical signal includes one or more of the following:

a first TCI state and/or a first beam index indicated in the DCI signaling corresponds to a first channel, and a second TCI state and/or a second beam index indicated in the DCI signaling corresponds to a second channel;

a TCI state indication field in the DCI signaling corresponds to a first channel, and a beam index indication field in the DCI signaling corresponds to a second channel;

a first valid TCI state and/or a first valid beam index indicated in the DCI signaling corresponds to a first channel, and a second valid TCI state and/or a second valid beam index indicated in the DCI signaling corresponds to a second channel; or

a first piece of valid beam information indicated in the DCI signaling corresponds to a first channel, and a second piece of valid beam information indicated in the DCI signaling corresponds to a second channel.

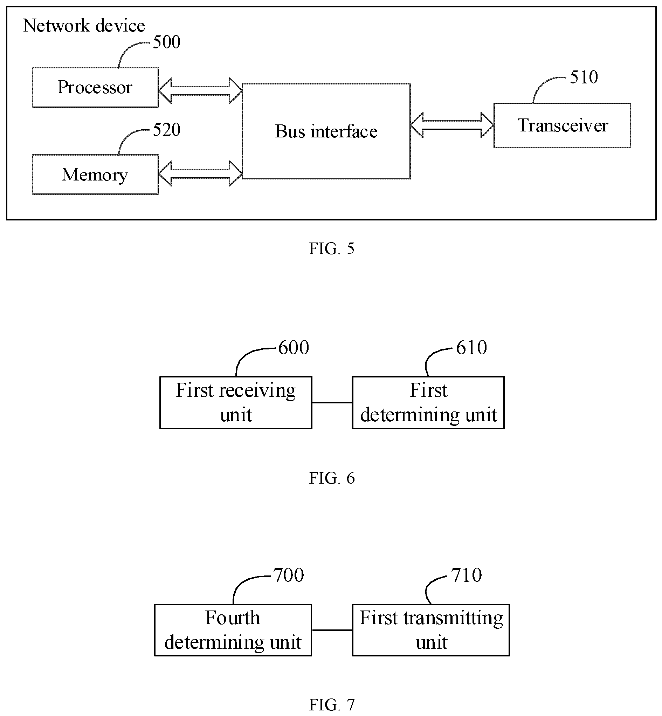

FIG. 5 is a schematic structural diagram of a network device according to an embodiment of the present application. As shown in FIG. 5, the network device includes a memory 520, a transceiver 510 and a processor 500, where the processor 500 and memory 520 may be physically arranged separately.

The memory 520 is used for storing a computer program, and the transceiver 510 is used for receiving and transmitting data under control of the processor 500.

In an embodiment, the transceiver 510 is used for receiving and transmitting data under control of the processor 500.

In FIG. 5, a bus architecture may include any number of interconnected buses and bridges, which are linked together through various circuits of one or more processors represented by the processor 500 and one or more memories represented by the memory 520. The bus architecture may also link together various other circuits, such as peripherals, voltage regulators, and power management circuits, etc., which are well known in the art, and therefore are not further described in the present application. The bus interface provides an interface. The transceiver 510 may include multiple elements, i.e., including a transmitter and a receiver, units for providing communication with various other devices over transmission media including wireless channels, wired channels, fiber optic cables, and the like.

The processor 500 is responsible for managing the bus architecture and general processing, and the memory 520 may store data used by the processor 500 when performing operations.

The processor 500 may be a CPU, an ASIC, an FPGA, or a CPLD, the processor may also use a multi-core architecture.

The processor 500 calls the computer program stored in the memory 520 to execute any of the methods performed by the network device provided by the embodiments of the present application in accordance with the obtained executable instructions. The method includes: determining a downlink control information (DCI) signaling, where the DCI signaling includes one or more first information fields, and the first information field is used to indicate one or more types of beam information; and transmitting the DCI signaling to a terminal; where the type of the beam information includes one or more of: beam index, transmission configuration indication (TCI) state, spatial relation information, wide beam index, or narrow beam index.

In some embodiments, the method further includes:
transmitting first configuration information to the terminal, where the first configuration information is used to configure one or more of:

a quantity of the first information fields;

a quantity of pieces of beam information indicated by the first information field;

a type of beam information indicated by the first information field; or

a quantity of pieces of beam information of different types indicated by the first information field.

In some embodiments, in case that the first configuration information is used to configure the quantity of pieces of beam information indicated by the first information field, or used to configure the quantity of pieces of beam information of different types indicated by the first information field, the DCI signaling further includes one or more second information fields, and the second information field is used to indicate valid beam information in the beam information indicated by the first information field.

In some embodiments, the second information field is used to indicate one or more of in the beam information indicated by the first information field:
a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.

In some embodiments, the method further includes:
transmitting a medium access control-control element (MAC-CE) signaling to the terminal, where the MAC-CE signaling is used to activate one or more beam information groups, and an activated beam information group includes one or more types of beam information.

In some embodiments, the beam information group is associated with first information indicated by the first information field.

In some embodiments, beam information of different types are jointly numbered.

In some embodiments, the MAC-CE signaling includes first indication information, and the first indication information is used to indicate a type of beam information.

In some embodiments, the DCI signaling includes second indication information, and the second indication information is used to indicate a type of beam information or a combination of types of beam information corresponding to the first information field.

In some embodiments, the second indication information is a most significant bit of the first information field, or other information fields in the DCI signaling except the first information field.

In some embodiments, the method further includes:

transmitting second configuration information to the terminal, where the second configuration information is used to configure an association relationship between the beam information and a physical channel or physical signal.

In some embodiments, the association relationship between the beam information and the physical channel or physical signal includes an association relationship between an information field, the beam information, or the type of the beam information and one or more of:

an uplink or downlink channel;

a channel corresponding to a time index;

a specific physical channel or physical signal;

a transmission occasion for a specific physical channel or physical signal; or

a number of transmission layers of a specific physical channel or physical signal.

In some embodiments, the association relationship between the beam information and the physical channel or physical signal includes one or more of the following:

a first TCI state and/or a first beam index indicated in the DCI signaling corresponds to a first channel, and a second TCI state and/or a second beam index indicated in the DCI signaling corresponds to a second channel;

a TCI state indication field in the DCI signaling corresponds to a first channel, and a beam index indication field in the DCI signaling corresponds to a second channel;

a first valid TCI state and/or a first valid beam index indicated in the DCI signaling corresponds to a first channel, and a second valid TCI state and/or a second valid beam index indicated in the DCI signaling corresponds to a second channel; or

a first piece of valid beam information indicated in the DCI signaling corresponds to a first channel, and a second piece of valid beam information indicated in the DCI signaling corresponds to a second channel.

It should be noted here that the above terminal and network device provided by the embodiments of the present application may implement all the method steps implemented by the above method embodiments, and may achieve the same effect. The same parts and beneficial effects as the same method embodiments are not repeated in the present application.

FIG. 6 is a first schematic structural diagram of an apparatus for beam indication according to an embodiment of the present application. As shown in FIG. 6, the apparatus includes:

a first receiving unit 600, used for receiving a downlink control information (DCI) signaling transmitted from a network device, where the DCI signaling includes one or more first information fields, and the first information field is used to indicate one or more types of beam information; and

a first determining unit 610, used for determining the beam information indicated by the network device based on the one or more first information fields;

where the type of the beam information includes one or more of: beam index, transmission configuration indication (TCI) state, spatial relation information, wide beam index, or narrow beam index.

In some embodiments, the apparatus further includes:
a second receiving unit, used for receiving first configuration information transmitted from the network device, where the first configuration information is used to configure one or more of:

a quantity of the first information fields;

a quantity of pieces of beam information indicated by the first information field;

a type of beam information indicated by the first information field; or

a quantity of pieces of beam information of different types indicated by the first information field.

In some embodiments, in case that the first configuration information is used to configure the quantity of pieces of beam information indicated by the first information field, or used to configure the quantity of pieces of beam information of different types indicated by the first information field, determining the beam information indicated by the network device based on the one or more first information fields includes:

determining the beam information indicated by the network device based on the one or more first information fields and one or more second information fields included in the DCI signaling,

where the second information field is used to indicate valid beam information in the beam information indicated by the first information field.

In some embodiments, the second information field is used to indicate one or more of in the beam information indicated by the first information field:
a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.
In some embodiments, the apparatus further includes:
a third receiving unit, used for receiving a medium access control-control element (MAC-CE) signaling transmitted from the network device, where the MAC-CE signaling is used to activate one or more beam information groups, and an activated beam information group includes one or more types of beam information.
In some embodiments, the beam information group is associated with first information indicated by the first information field; and
determining the beam information indicated by the network device based on the one or more first information fields includes:
determining the beam information indicated by the network device based on the first information indicated by the one or more first information fields, and an association relationship between the beam information group and the first information indicated by the first information field.
In some embodiments, beam information of different types are jointly numbered.
In some embodiments, the apparatus further includes:
a second determining unit, used for determining a type of beam information activated by the MAC-CE signaling based on a sequence number of the beam information.
In some embodiments, the MAC-CE signaling includes first indication information, and the first indication information is used to indicate a type of beam information.
In some embodiments, the DCI signaling includes second indication information, and the second indication information is used to indicate a type of beam information or a combination of types of beam information corresponding to the first information field.
In some embodiments, the second indication information is a most significant bit of the first information field, or other information fields in the DCI signaling except the first information field.
In some embodiments, the apparatus further includes:

a third determining unit, used for determining, based on an association relationship between the beam information and a physical channel or physical signal, the physical channel or physical signal corresponding to the beam information indicated by the network device,

where the association relationship between the beam information and the physical channel or physical signal is predefined by a specification or determined based on second configuration information transmitted from the network device.

In some embodiments, the association relationship between the beam information and the physical channel or physical signal includes an association relationship between an information field, the beam information, or the type of the beam information and one or more of:

an uplink or downlink channel;

a channel corresponding to a time index;

a specific physical channel or physical signal;

a transmission occasion for a specific physical channel or physical signal; or

a number of transmission layers of a specific physical channel or physical signal.

In some embodiments, the association relationship between the beam information and the physical channel or physical signal includes one or more of:

a first TCI state and/or a first beam index indicated in the DCI signaling corresponds to a first channel, and a second TCI state and/or a second beam index indicated in the DCI signaling corresponds to a second channel;

a TCI state indication field in the DCI signaling corresponds to a first channel, and a beam index indication field in the DCI signaling corresponds to a second channel;

a first valid TCI state and/or a first valid beam index indicated in the DCI signaling corresponds to a first channel, and a second valid TCI state and/or a second valid beam index indicated in the DCI signaling corresponds to a second channel; or

a first piece of valid beam information indicated in the DCI signaling corresponds to a first channel, and a second piece of valid beam information indicated in the DCI signaling corresponds to a second channel.

FIG. 7 is a second schematic structural diagram of an apparatus for beam indication according to an embodiment of the present application. As shown in FIG. 7, the apparatus includes:

a fourth determining unit 700, used for determining a downlink control information (DCI) signaling, where the DCI signaling includes one or more first information fields, and the first information field is used to indicate one or more types of beam information; and

a first transmitting unit 710, used for transmitting the DCI signaling to a terminal;

where the type of the beam information includes one or more of: beam index, transmission configuration indication (TCI) state, spatial relation information, wide beam index, or narrow beam index.

In some embodiments, the apparatus further includes:
a second transmitting unit, used for transmitting first configuration information to the terminal, where the first configuration information is used to configure one or more of:

a quantity of the first information fields;

a quantity of pieces of beam information indicated by the first information field;

a type of beam information indicated by the first information field; or

a quantity of pieces of beam information of different types indicated by the first information field.

In some embodiments, in case that the first configuration information is used to configure the quantity of pieces of beam information indicated by the first information field, or used to configure the quantity of pieces of beam information of different types indicated by the first information field, the DCI signaling further includes one or more second information fields, and the second information field is used to indicate valid beam information in the beam information indicated by the first information field.

In some embodiments, the second information field is used to indicate one or more of in the beam information indicated by the first information field:

a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.

In some embodiments, the apparatus further includes:

a third transmitting unit, used for transmitting a medium access control-control element (MAC-CE) signaling to the terminal, where the MAC-CE signaling is used to activate one or more beam information groups, and an activated beam information group includes one or more types of beam information.

In some embodiments, the beam information group is associated with first information indicated by the first information field.

In some embodiments, beam information of different types are jointly numbered.

In some embodiments, the MAC-CE signaling includes first indication information, and the first indication information is used to indicate a type of beam information.

In some embodiments, the DCI signaling includes second indication information, and the second indication information is used to indicate a type of beam information or a combination of types of beam information corresponding to the first information field.

In some embodiments, the second indication information is a most significant bit of the first information field, or other information fields in the DCI signaling except the first information field.

In some embodiments, the apparatus further includes:

a fourth transmitting unit, used for transmitting second configuration information to the terminal, where the second configuration information is used to configure an association relationship between the beam information and a physical channel or physical signal.

In some embodiments, the association relationship between the beam information and the physical channel or physical signal includes an association relationship between an information field, the beam information, or the type of the beam information and one or more of:

an uplink or downlink channel;

a channel corresponding to a time index;

a specific physical channel or physical signal;

a transmission occasion for a specific physical channel or physical signal; or

a number of transmission layers of a specific physical channel or physical signal.

In some embodiments, the association relationship between the beam information and the physical channel or physical signal includes one or more of:

a first TCI state and/or a first beam index indicated in the DCI signaling corresponds to a first channel, and a second TCI state and/or a second beam index indicated in the DCI signaling corresponds to a second channel;

a TCI state indication field in the DCI signaling corresponds to a first channel, and a beam index indication field in the DCI signaling corresponds to a second channel;

a first valid TCI state and/or a first valid beam index indicated in the DCI signaling corresponds to a first channel, and a second valid TCI state and/or a second valid beam index indicated in the DCI signaling corresponds to a second channel; or

a first piece of valid beam information indicated in the DCI signaling corresponds to a first channel, and a second piece of valid beam information indicated in the DCI signaling corresponds to a second channel.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above apparatus according to the embodiments of the present application may implement all the method steps implemented by the above method embodiments, and may achieve the same effect. The same parts and beneficial effects as the same method embodiments are not repeated here.

An embodiment of the present application further provides a computer readable storage medium storing a computer program, where the computer program is used for causing a computer to perform any of the methods for beam indication provided by above embodiments.

It should be noted here that the computer readable storage medium according to the embodiments of the present application may implement all the method steps implemented by the above method embodiments, and may achieve the same effect. The same parts and beneficial effects as the same method embodiments are not repeated here.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A method for beam indication, performed by a terminal, comprising:

   receiving a downlink control information (DCI) signaling transmitted from a network device, wherein the DCI signaling comprises one or more first information fields, and the first information field is used to indicate one or more types of beam information; and
   determining the beam information indicated by the network device based on the one or more first information fields;
   wherein the type of the beam information comprises one or more of: beam index, transmission configuration indication (TCI) state, spatial relation information, wide beam index, or narrow beam index.

2. The method of claim 1, wherein before receiving the DCI signaling transmitted from the network device, the method further comprises:
   receiving first configuration information transmitted from the network device, wherein the first configuration information is used to configure one or more of:

   a quantity of the first information fields;

a quantity of pieces of beam information indicated by the first information field;
a type of beam information indicated by the first information field; or
a quantity of pieces of beam information of different types indicated by the first information field.

3. The method of claim 2, wherein in case that the first configuration information is used to configure the quantity of pieces of beam information indicated by the first information field, or used to configure the quantity of pieces of beam information of different types indicated by the first information field, determining the beam information indicated by the network device based on the one or more first information fields comprises:

determining the beam information indicated by the network device based on the one or more first information fields and one or more second information fields comprised in the DCI signaling, wherein the second information field is used to indicate valid beam information in the beam information indicated by the first information field.

4. The method of claim 3, wherein the second information field is used to indicate one or more of in the beam information indicated by the first information field:
a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.

5. The method of claim 1 or 2, further comprising:
receiving a medium access control-control element (MAC-CE) signaling transmitted from the network device, wherein the MAC-CE signaling is used to activate one or more beam information groups, and an activated beam information group comprises one or more types of beam information.

6. The method of claim 5, wherein the beam information group is associated with first information indicated by the first information field; and
determining the beam information indicated by the network device based on the one or more first information fields comprises:
determining the beam information indicated by the network device based on the first information indicated by the one or more first information fields, and an association relationship between the beam information group and the first information indicated by the first information field.

7. The method of claim 5, wherein beam information of different types are jointly numbered.

8. The method of claim 7, further comprising:
determining a type of beam information activated by the MAC-CE signaling based on an index of the beam information.

9. The method of claim 5, wherein the MAC-CE signaling comprises first indication information, and the first indication information is used to indicate a type of beam information.

10. The method of claim 1, wherein the DCI signaling comprises second indication information, and the second indication information is used to indicate a type of beam information or a combination of types of beam information corresponding to the first information field.

11. The method of claim 10, wherein the second indication information is a most significant bit of the first information field, or other information fields in the DCI signaling except the first information field.

12. The method of claim 1, further comprising:

determining, based on an association relationship between the beam information and a physical channel or physical signal, the physical channel or physical signal corresponding to the beam information indicated by the network device,
wherein the association relationship between the beam information and the physical channel or physical signal is predefined by a specification or determined based on second configuration information transmitted from the network device.

13. The method of claim 12, wherein the association relationship between the beam information and the physical channel or physical signal comprises an association relationship between an information field, the beam information, or the type of the beam information and one or more of:

an uplink or downlink channel;
a channel corresponding to a time index;
a specific physical channel or physical signal;
a transmission occasion for a specific physical channel or physical signal; or
a number of transmission layers of a specific physical channel or physical signal.

14. The method of claim 13, wherein the association relationship between the beam information and the physical channel or physical signal comprises one or more of:

a first TCI state and/or a first beam index indicated in the DCI signaling corresponds to a first channel, and a second TCI state and/or a second beam index indicated in the DCI signaling corresponds to a second channel;
a TCI state indication field in the DCI signaling corresponds to a first channel, and a beam index indication field in the DCI signaling corresponds to a second channel;
a first valid TCI state and/or a first valid beam index indicated in the DCI signaling corresponds to a first channel, and a second valid TCI state and/or a second valid beam index indicated in the DCI signaling corresponds to a second channel; or
a first piece of valid beam information indicated in the DCI signaling corresponds to a first channel, and a second piece of valid beam information indicated in the DCI signaling corresponds to a second channel.

15. A method for beam indication, performed by a network device, comprising:

determining a downlink control information (DCI) signaling, wherein the DCI signaling comprises one or more first information fields, and the first information field is used to indicate one or more types of beam information; and
transmitting the DCI signaling to a terminal;
wherein the type of the beam information comprises one or more of: beam index, transmission configuration indication (TCI) state, spatial relation information, wide beam index, or narrow beam index.

16. The method of claim 15, further comprising:
transmitting first configuration information to the terminal, wherein the first configuration information is used to configure one or more of:

a quantity of the first information fields;
a quantity of pieces of beam information indicated by the first information field;
a type of beam information indicated by the first information field; or
a quantity of pieces of beam information of different types indicated by the first information field.

17. The method of claim 16, wherein in case that the first configuration information is used to configure the quantity of pieces of beam information indicated by the first information field, or used to configure the quantity of pieces of beam information of different types indicated by the first information field, the DCI signaling further comprises one or more second information fields, and the second information field is used to indicate valid beam information in the beam information indicated by the first information field.

18. The method of claim 17, wherein the second information field is used to indicate one or more of in the beam information indicated by the first information field:
a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.

19. The method of claim 15 or 16, further comprising:
transmitting a medium access control-control element (MAC-CE) signaling to the terminal, wherein the MAC-CE signaling is used to activate one or more beam information groups, and an activated beam information group comprises one or more types of beam information.

20. The method of claim 19, wherein the beam information group is associated with first information indicated by the first information field.

21. The method of claim 19, wherein beam information of different types are jointly numbered.

22. The method of claim 19, wherein the MAC-CE signaling comprises first indication information, and the first indication information is used to indicate a type of beam information.

23. The method of claim 15, wherein the DCI signaling comprises second indication information, and the second indication information is used to indicate a type of beam information or a combination of types of beam information corresponding to the first information field.

24. The method of claim 23, wherein the second indication information is a most significant bit of the first information field, or other information fields in the DCI signaling except the first information field.

25. The method of claim 15, further comprising:
transmitting second configuration information to the terminal, wherein the second configuration information is used to configure an association relationship between the beam information and a physical channel or physical signal.

26. The method of claim 25, wherein the association relationship between the beam information and the physical channel or physical signal comprises an association relationship between an information field, the beam information, or the type of the beam information and one or more of:

an uplink or downlink channel;
a channel corresponding to a time index;
a specific physical channel or physical signal;
a transmission occasion for a specific physical channel or physical signal; or
a number of transmission layers of a specific physical channel or physical signal.

27. The method of claim 26, wherein the association relationship between the beam information and the physical channel or physical signal comprises one or more of:

a first TCI state and/or a first beam index indicated in the DCI signaling corresponds to a first channel, and a second TCI state and/or a second beam index indicated in the DCI signaling corresponds to a second channel;
a TCI state indication field in the DCI signaling corresponds to a first channel, and a beam index indication field in the DCI signaling corresponds to a second channel;
a first valid TCI state and/or a first valid beam index indicated in the DCI signaling corresponds to a first channel, and a second valid TCI state and/or a second valid beam index indicated in the DCI signaling corresponds to a second channel; or
a first piece of valid beam information indicated in the DCI signaling corresponds to a first channel, and a second piece of valid beam information indicated in the DCI signaling corresponds to a second channel.

28. A terminal, comprising a memory, a transceiver and a processor,
wherein the memory is used for storing a computer program, the transceiver is used for receiving and transmitting data under control of the processor, and the processor is used for reading the computer program in the memory and performing following operations:

receiving a downlink control information (DCI) signaling transmitted from a network device, wherein the DCI signaling comprises one or more first information fields, and the first information field is used to indicate one or more types of beam information; and
determining the beam information indicated by the network device based on the one or more first information fields;
wherein the type of the beam information comprises one or more of: beam index, transmission configuration indication (TCI) state, spatial relation information, wide beam index, or narrow beam index.

29. The terminal of claim 28, wherein before receiving the DCI signaling transmitted from the network device, the operations further comprise:
receiving first configuration information transmitted from the network device, wherein the first configuration information is used to configure one or more of:

a quantity of the first information fields;
a quantity of pieces of beam information indicated by the first information field;
a type of beam information indicated by the first information field; or
a quantity of pieces of beam information of different types indicated by the first information field.

30. The terminal of claim 29, wherein in case that the first configuration information is used to configure the quantity of pieces of beam information indicated by the first information field, or used to configure the quantity of pieces of beam information of different types indicated by the first information field, determining the beam information indicated by the network device based on the one or more first information fields comprises:

determining the beam information indicated by the network device based on the one or more first information fields and one or more second information fields comprised in the DCI signaling,
wherein the second information field is used to indicate valid beam information in the beam information indicated by the first information field.

31. The terminal of claim 30, wherein the second information field is used to indicate one or more of in the beam information indicated by the first information field:
a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.

32. The terminal of claim 28 or 29, wherein the operations further comprise:
receiving a medium access control-control element (MAC-CE) signaling transmitted from the network device, wherein the MAC-CE signaling is used to activate one or more beam information groups, and an activated beam information group comprises one or more types of beam information.

33. The terminal of claim 32, wherein the beam information group is associated with first information indicated by the first information field; and
determining the beam information indicated by the network device based on the one or more first information fields comprises:
determining the beam information indicated by the network device based on the first information indicated by the one or more first information fields, and an association relationship between the beam information group and the first information indicated by the first information field.

34. The terminal of claim 32, wherein beam information of different types are jointly numbered.

35. The terminal of claim 34, wherein the operations further comprise:
determining a type of beam information activated by the MAC-CE signaling based on a sequence number of the beam information.

36. The terminal of claim 32, wherein the MAC-CE signaling comprises first indication information, and the first indication information is used to indicate a type of beam information.

37. The terminal of claim 28, wherein the DCI signaling comprises second indication information, and the second indication information is used to indicate a type of beam information or a combination of types of beam information corresponding to the first information field.

38. The terminal of claim 37, wherein the second indication information is a most significant bit of the first information field, or other information fields in the DCI signaling except the first information field.

39. The terminal of claim 28, wherein the operations further comprise:

determining, based on an association relationship between the beam information and a physical channel or physical signal, the physical channel or physical signal corresponding to the beam information indicated by the network device,

wherein the association relationship between the beam information and the physical channel or physical signal is predefined by a specification or determined based on second configuration information transmitted from the network device.

40. The terminal of claim 39, wherein the association relationship between the beam information and the physical channel or physical signal comprises an association relationship between an information field, the beam information, or the type of the beam information and one or more of:

an uplink or downlink channel;
a channel corresponding to a time index;
a specific physical channel or physical signal;
a transmission occasion for a specific physical channel or physical signal; or
a number of transmission layers of a specific physical channel or physical signal.

41. The terminal of claim 40, wherein the association relationship between the beam information and the physical channel or physical signal comprises one or more of:

a first TCI state and/or a first beam index indicated in the DCI signaling corresponds to a first channel, and a second TCI state and/or a second beam index indicated in the DCI signaling corresponds to a second channel;
a TCI state indication field in the DCI signaling corresponds to a first channel, and a beam index indication field in the DCI signaling corresponds to a second channel;
a first valid TCI state and/or a first valid beam index indicated in the DCI signaling corresponds to a first channel, and a second valid TCI state and/or a second valid beam index indicated in the DCI signaling corresponds to a second channel; or
a first piece of valid beam information indicated in the DCI signaling corresponds to a first channel, and a second piece of valid beam information indicated in the DCI signaling corresponds to a second channel.

42. A network device, comprising a memory, a transceiver and a processor,
wherein the memory is used for storing a computer program, the transceiver is used for receiving and transmitting data under control of the processor, and the processor is used for reading the computer program in the memory and performing following operations:

determining a downlink control information (DCI) signaling, wherein the DCI signaling comprises one or more first information fields, and the first information field is used to indicate one or more types of beam information; and transmitting the DCI signaling to a terminal;
wherein the type of the beam information comprises one or more of: beam index, transmission configuration indication (TCI) state, spatial relation information, wide beam index, or narrow beam index.

43. The network device of claim 42, wherein the operations further comprise:
transmitting first configuration information to the terminal, wherein the first configuration information is used to configure one or more of:

a quantity of the first information fields;
a quantity of pieces of beam information indicated by the first information field;
a type of beam information indicated by the first information field; or
a quantity of pieces of beam information of different types indicated by the first information field.

44. The network device of claim 43, wherein in case that the first configuration information is used to configure the quantity of pieces of beam information indicated by the first information field, or used to configure the quantity of pieces of beam information of different types indicated by the first information field, the DCI signaling further comprises one or more second information fields, and the second information field is used to indicate valid beam information in the beam information indicated by the first information field.

45. The network device of claim 44, wherein the second information field is used to indicate one or more of in the beam information indicated by the first information field:
a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.

46. The network device of claim 42 or 43, wherein the operations further comprise:
transmitting a medium access control-control element (MAC-CE) signaling to the terminal, wherein the MAC-CE signaling is used to activate one or more beam information groups, and an activated beam information group comprises one or more types of beam information.

47. The network device of claim 46, wherein the beam information group is associated with first information indicated by the first information field.

48. The network device of claim 46, wherein beam information of different types are jointly numbered.

49. The network device of claim 46, wherein the MAC-CE signaling comprises first indication information, and the first indication information is used to indicate a type of beam information.

50. The network device of claim 42, wherein the DCI signaling comprises second indication information, and the second indication information is used to indicate a type of beam information or a combination of types of beam information corresponding to the first information field.

51. The network device of claim 50, wherein the second indication information is a most significant bit of the first information field, or other information fields in the DCI signaling except the first information field.

52. The network device of claim 42, wherein the operations further comprise:
transmitting second configuration information to the terminal, wherein the second configuration information is used to configure an association relationship between the beam information and a physical channel or physical signal.

53. The network device of claim 52, wherein the association relationship between the beam information and the physical channel or physical signal comprises an association relationship between an information field, the beam information, or the type of the beam information and one or more of:

an uplink or downlink channel;
a channel corresponding to a time index;
a specific physical channel or physical signal;
a transmission occasion for a specific physical channel or physical signal; or
a number of transmission layers of a specific physical channel or physical signal.

54. The network device of claim 53, wherein the association relationship between the beam information and the physical channel or physical signal comprises one or more of:

a first TCI state and/or a first beam index indicated in the DCI signaling corresponds to a first channel, and a second TCI state and/or a second beam index indicated in the DCI signaling corresponds to a second channel;
a TCI state indication field in the DCI signaling corresponds to a first channel, and a beam index indication field in the DCI signaling corresponds to a second channel;
a first valid TCI state and/or a first valid beam index indicated in the DCI signaling corresponds to a first channel, and a second valid TCI state and/or a second valid beam index indicated in the DCI signaling corresponds to a second channel; or
a first piece of valid beam information indicated in the DCI signaling corresponds to a first channel, and a second piece of valid beam information indicated in the DCI signaling corresponds to a second channel.

55. An apparatus for beam indication, comprising:

a first receiving unit, used for receiving a downlink control information (DCI) signaling transmitted from a network device, wherein the DCI signaling comprises one or more first information fields, and the first information field is used to indicate one or more types of beam information; and
a first determining unit, used for determining the beam information indicated by the network device based on the one or more first information fields;
wherein the type of the beam information comprises one or more of: beam index, transmission configuration indication (TCI) state, spatial relation information, wide beam index, or narrow beam index.

**56.** The apparatus of claim 55, further comprising:
a second receiving unit, used for receiving first configuration information transmitted from the network device, wherein the first configuration information is used to configure one or more of:

a quantity of the first information fields;
a quantity of pieces of beam information indicated by the first information field;
a type of beam information indicated by the first information field; or
a quantity of pieces of beam information of different types indicated by the first information field.

**57.** The apparatus of claim 56, wherein in case that the first configuration information is used to configure the quantity of pieces of beam information indicated by the first information field, or used to configure the quantity of pieces of beam information of different types indicated by the first information field, determining the beam information indicated by the network device based on the one or more first information fields comprises:

determining the beam information indicated by the network device based on the one or more first information fields and one or more second information fields comprised in the DCI signaling,
wherein the second information field is used to indicate valid beam information in the beam information indicated by the first information field.

**58.** The apparatus of claim 57, wherein the second information field is used to indicate one or more of in the beam information indicated by the first information field:
a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.

**59.** The apparatus of claim 55 or 56, further comprising:
a third receiving unit, used for receiving a medium access control-control element (MAC-CE) signaling transmitted from the network device, wherein the MAC-CE signaling is used to activate one or more beam information groups, and an activated beam information group comprises one or more types of beam information.

**60.** The apparatus of claim 59, wherein the beam information group is associated with first information indicated by the first information field; and
determining the beam information indicated by the network device based on the one or more first information fields comprises:
determining the beam information indicated by the network device based on the first information indicated by the one or more first information fields, and an association relationship between the beam information group and the first information indicated by the first information field.

**61.** The apparatus of claim 59, wherein beam information of different types are jointly numbered.

**62.** The apparatus of claim 61, further comprising:
a second determining unit, used for determining a type of beam information activated by the MAC-CE signaling based on a sequence number of the beam information.

**63.** The apparatus of claim 59, wherein the MAC-CE signaling comprises first indication information, and the first indication information is used to indicate a type of beam information.

**64.** The apparatus of claim 55, wherein the DCI signaling comprises second indication information, and the second indication information is used to indicate a type of beam information or a combination of types of beam information corresponding to the first information field.

**65.** The apparatus of claim 64, wherein the second indication information is a most significant bit of the first information field, or other information fields in the DCI signaling except the first information field.

**66.** The apparatus of claim 55, further comprising:

a third determining unit, used for determining, based on an association relationship between the beam information and a physical channel or physical signal, the physical channel or physical signal corresponding to the beam information indicated by the network device,

wherein the association relationship between the beam information and the physical channel or physical signal is predefined by a specification or determined based on second configuration information transmitted from the network device.

67. The apparatus of claim 66, wherein the association relationship between the beam information and the physical channel or physical signal comprises an association relationship between an information field, the beam information, or the type of the beam information and one or more of:

an uplink or downlink channel;
a channel corresponding to a time index;
a specific physical channel or physical signal;
a transmission occasion for a specific physical channel or physical signal; or
a number of transmission layers of a specific physical channel or physical signal.

68. The apparatus of claim 67, wherein the association relationship between the beam information and the physical channel or physical signal comprises one or more of:

a first TCI state and/or a first beam index indicated in the DCI signaling corresponds to a first channel, and a second TCI state and/or a second beam index indicated in the DCI signaling corresponds to a second channel;
a TCI state indication field in the DCI signaling corresponds to a first channel, and a beam index indication field in the DCI signaling corresponds to a second channel;
a first valid TCI state and/or a first valid beam index indicated in the DCI signaling corresponds to a first channel, and a second valid TCI state and/or a second valid beam index indicated in the DCI signaling corresponds to a second channel; or
a first piece of valid beam information indicated in the DCI signaling corresponds to a first channel, and a second piece of valid beam information indicated in the DCI signaling corresponds to a second channel.

69. An apparatus for beam indication, comprising:

a fourth determining unit, used for determining a downlink control information (DCI) signaling, wherein the DCI signaling comprises one or more first information fields, and the first information field is used to indicate one or more types of beam information; and
a first transmitting unit, used for transmitting the DCI signaling to a terminal;
wherein the type of the beam information comprises one or more of: beam index, transmission configuration indication (TCI) state, spatial relation information, wide beam index, or narrow beam index.

70. The apparatus of claim 69, further comprising:
a second transmitting unit, used for transmitting first configuration information to the terminal, wherein the first configuration information is used to configure one or more of:

a quantity of the first information fields;
a quantity of pieces of beam information indicated by the first information field;
a type of beam information indicated by the first information field; or
a quantity of pieces of beam information of different types indicated by the first information field.

71. The apparatus of claim 70, wherein in case that the first configuration information is used to configure the quantity of pieces of beam information indicated by the first information field, or used to configure the quantity of pieces of beam information of different types indicated by the first information field, the DCI signaling further comprises one or more second information fields, and the second information field is used to indicate valid beam information in the beam information indicated by the first information field.

72. The apparatus of claim 71, wherein the second information field is used to indicate one or more of in the beam information indicated by the first information field:
a valid TCI state identity, a valid beam index, a valid spatial relation information index, a valid wide beam index, a valid narrow beam index, a quantity of valid TCI states, a quantity of valid beam indexes, a quantity of pieces of valid spatial relation information, a quantity of valid wide beam indexes, a quantity of valid narrow beam indexes, or a type of valid beam information.

73. The apparatus of claim 69 or 70, further comprising:
a third transmitting unit, used for transmitting a medium access control-control element (MAC-CE) signaling to the terminal, wherein the MAC-CE signaling is used to activate one or more beam information groups, and an activated beam information group comprises one or more types of beam information.

74. The apparatus of claim 73, wherein the beam information group is associated with first information indicated by the first information field.

75. The apparatus of claim 73, wherein beam information of different types are jointly numbered.

76. The apparatus of claim 73, wherein the MAC-CE signaling comprises first indication information, and the first indication information is used to indicate a type of beam information.

77. The apparatus of claim 69, wherein the DCI signaling comprises second indication information, and the second indication information is used to indicate a type of beam information or a combination of types of beam information corresponding to the first information field.

78. The apparatus of claim 77, wherein the second indication information is a most significant bit of the first information field, or other information fields in the DCI signaling except the first information field.

79. The apparatus of claim 69, further comprising:
a fourth transmitting unit, used for transmitting second configuration information to the terminal, wherein the second configuration information is used to configure an association relationship between the beam information and a physical channel or physical signal.

80. The apparatus of claim 79, wherein the association relationship between the beam information and the physical channel or physical signal comprises an association relationship between an information field, the beam information, or the type of the beam information and one or more of:

an uplink or downlink channel;
a channel corresponding to a time index;
a specific physical channel or physical signal;
a transmission occasion for a specific physical channel or physical signal; or
a number of transmission layers of a specific physical channel or physical signal.

81. The apparatus of claim 80, wherein the association relationship between the beam information and the physical channel or physical signal comprises one or more of:

a first TCI state and/or a first beam index indicated in the DCI signaling corresponds to a first channel, and a second TCI state and/or a second beam index indicated in the DCI signaling corresponds to a second channel;
a TCI state indication field in the DCI signaling corresponds to a first channel, and a beam index indication field in the DCI signaling corresponds to a second channel;
a first valid TCI state and/or a first valid beam index indicated in the DCI signaling corresponds to a first channel, and a second valid TCI state and/or a second valid beam index indicated in the DCI signaling corresponds to a second channel; or
a first piece of valid beam information indicated in the DCI signaling corresponds to a first channel, and a second piece of valid beam information indicated in the DCI signaling corresponds to a second channel.

82. A computer-readable storage medium storing a computer program, wherein the computer program is used for causing a computer to perform the method of any of claims 1 to 14, or to perform the method of any of claims 15 to 27.

Receiving a downlink control information (DCI) signaling transmitted from a network device, where the DCI signaling includes one or more first information fields, and the first information field is used to indicate one or more types of beam information — 100

Determining the beam information indicated by the network device based on the one or more first information fields — 101

FIG. 1

Determining a downlink control information (DCI) signaling, where the DCI signaling includes one or more first information fields, and the first information field is used to indicate one or more types of beam information — 200

Transmitting the DCI signaling to a terminal — 201

FIG. 2

FIG. 3

FIG. 4

Network device
~500
┌─────────────┐          ┌──────────────┐          ~510
│  Processor  │⟺         │              │          ┌──────────────┐
└─────────────┘          │              │⟺         │ Transceiver  │
~520                     │ Bus interface│          └──────────────┘
┌─────────────┐          │              │
│   Memory    │⟺         │              │
└─────────────┘          └──────────────┘

FIG. 5

~600                          ~610
┌─────────────────┐     ┌──────────────────┐
│ First receiving │     │      First       │
│      unit       │─────│ determining unit │
└─────────────────┘     └──────────────────┘

FIG. 6

~700                          ~710
┌─────────────────┐     ┌──────────────────┐
│     Fourth      │     │ First transmitting│
│ determining unit│─────│       unit        │
└─────────────────┘     └──────────────────┘

FIG. 7

## INTERNATIONAL SEARCH REPORT

| | International application No. |
|---|---|
| | **PCT/CN2023/132029** |

**A. CLASSIFICATION OF SUBJECT MATTER**

H04B7/08(2006.01)i; H04W72/04(2023.01)i

According to International Patent Classification (IPC) or to both national classification and IPC

**B. FIELDS SEARCHED**

Minimum documentation searched (classification system followed by classification symbols)

IPC: H04B, H04W

Documentation searched other than minimum documentation to the extent that such documents are included in the fields searched

Electronic data base consulted during the international search (name of data base and, where practicable, search terms used)

3GPP, CNTXT, ENTXTC, CNKI, WPABS: 波束索引, 波束信息指示, 波束指示, 空间关系, 空域发送滤波器, 空域滤波器, 下行链路控制信息, 分布式表面, 分布式智能表面, beam, DCI, index, NR, QCL, RIS, TCI, indicat+

**C. DOCUMENTS CONSIDERED TO BE RELEVANT**

| Category* | Citation of document, with indication, where appropriate, of the relevant passages | Relevant to claim No. |
|---|---|---|
| X | CN 114828239 A (DATANG MOBILE COMMUNICATIONS EQUIPMENT CO., LTD.) 29 July 2022 (2022-07-29)<br>description, paragraphs 71-144, 191-237, 239-268, and 272-277 | 1, 5, 6, 15, 19, 20, 28, 32, 33, 42, 46, 47, 55, 59, 60, 69, 73, 74, 82 |
| X | CN 113890702 A (DATANG MOBILE COMMUNICATIONS EQUIPMENT CO., LTD.) 04 January 2022 (2022-01-04)<br>description, paragraphs 149-176, 187-199, 313-361, and 364-543 | 1, 5, 6, 15, 19, 20, 28, 32, 33, 42, 46, 47, 55, 59, 60, 69, 73, 74, 82 |
| A | CN 113170467 A (BEIJING XIAOMI MOBILE SOFTWARE CO., LTD.) 23 July 2021 (2021-07-23)<br>entire description | 1-82 |
| A | CN 113259952 A (VIVO MOBILE COMMUNICATION CO., LTD.) 13 August 2021 (2021-08-13)<br>entire description | 1-82 |
| A | CN 114501626 A (DATANG MOBILE COMMUNICATIONS EQUIPMENT CO., LTD.) 13 May 2022 (2022-05-13)<br>entire description | 1-82 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 January 2024** | **20 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/132029** |

**C. DOCUMENTS CONSIDERED TO BE RELEVANT**

| Category* | Citation of document, with indication, where appropriate, of the relevant passages | Relevant to claim No. |
|---|---|---|
| A | CN 115334658 A (DATANG MOBILE COMMUNICATIONS EQUIPMENT CO., LTD.) 11 November 2022 (2022-11-11)<br>entire description | 1-82 |
| A | WO 2022082687 A1 (HUAWEI TECHNOLOGIES CO., LTD.) 28 April 2022 (2022-04-28)<br>entire description | 1-82 |
| A | ERICSSON. ""R1-1716350 On beam indication, measurement, and reporting""<br>*3GPP tsg_ran\WG1_RL*, 12 September 2017 (2017-09-12),<br>entire document | 1-82 |

Form PCT/ISA/210 (second sheet) (July 2022)

**INTERNATIONAL SEARCH REPORT**
Information on patent family members

International application No.

**PCT/CN2023/132029**

| Patent document cited in search report | | | Publication date (day/month/year) | Patent family member(s) | | | Publication date (day/month/year) |
|---|---|---|---|---|---|---|---|
| CN | 114828239 | A | 29 July 2022 | WO | 2022151953 | A1 | 21 July 2022 |
| | | | | AU | 2021418673 | A1 | 10 August 2023 |
| CN | 113890702 | A | 04 January 2022 | WO | 2022002201 | A1 | 06 January 2022 |
| | | | | TW | 202203677 | A | 16 January 2022 |
| | | | | EP | 4178292 | A1 | 10 May 2023 |
| | | | | CN | 113890702 | B | 12 May 2023 |
| | | | | US | 2023261724 | A1 | 17 August 2023 |
| CN | 113170467 | A | 23 July 2021 | WO | 2022141642 | A1 | 07 July 2022 |
| | | | | CN | 113170467 | B | 10 January 2023 |
| | | | | KR | 20230125315 | A | 29 August 2023 |
| CN | 113259952 | A | 13 August 2021 | WO | 2021155768 | A1 | 12 August 2021 |
| | | | | CN | 113259952 | B | 15 July 2022 |
| | | | | KR | 20220137739 | A | 12 October 2022 |
| | | | | CN | 115226117 | A | 21 October 2022 |
| | | | | US | 2022368493 | A1 | 17 November 2022 |
| | | | | EP | 4102874 | A1 | 14 December 2022 |
| | | | | JP | 2023512808 | W | 29 March 2023 |
| CN | 114501626 | A | 13 May 2022 | WO | 2022083774 | A1 | 28 April 2022 |
| | | | | KR | 20230088450 | A | 19 June 2023 |
| | | | | EP | 4236535 | A1 | 30 August 2023 |
| CN | 115334658 | A | 11 November 2022 | WO | 2022237637 | A1 | 17 November 2022 |
| WO | 2022082687 | A1 | 28 April 2022 | KR | 20220144706 | A | 27 October 2022 |

Form PCT/ISA/210 (patent family annex) (July 2022)

**REFERENCES CITED IN THE DESCRIPTION**

**Patent documents cited in the description**

• CN 202211617539